# EUROPÄISCHE PATENTSCHRIFT

(11) **EP 4 069 522 B1**
(45) Veröffentlichungstag und Bekanntmachung des Hinweises auf die Patenterteilung: **04.12.2024**
(21) Anmeldenummer: 20811302.7
(22) Anmeldetag: 20.11.2020
(51) Int. Cl.: B42D 25/425, B42D 25/46

(54) **DEKORFOLIE, VERFAHREN ZUR HERSTELLUNG EINER DEKORFOLIE UND VERFAHREN ZUR DEKORATION EINES ZIELSUBSTRATS**
DECORATIVE FOIL, METHOD FOR PRODUCING A DECORATIVE FOIL AND METHOD FOR DECORATING A TARGET SUBSTRATE
FILM DÉCORATIF, PROCÉDÉ DE FABRICATION D'UN FILM DÉCORATIF ET PROCÉDÉ DE DÉCORATION D'UN SUBSTRAT CIBLE

(30) Priorität: 03.12.2019 DE 102019132787
(43) Veröffentlichungstag der Anmeldung: 12.10.2022
(60) Teilanmeldung: 24209891.1
(73) Patentinhaber: LEONHARD KURZ Stiftung & Co. KG, 90763 Fürth (DE)
(72) Erfinder: LASCH, Roman, Fürth 90762 (DE)
(74) Vertreter: Louis Pöhlau Lohrentz
(86) Internationale Anmeldenummer: PCT/EP2020/082896
(87) Internationale Veröffentlichungsnummer: WO 2021/110439

(56) Entgegenhaltungen:
- EP-A2- 2 172 347
- WO-A1-2013/107777
- DE-A1- 102015 121 849

## Beschreibung

Die Erfindung betrifft eine Dekorfolie, insbesondere Laminierfolie, Heißprägefolie und/oder Kaltprägefolie, ein Verfahren zur Herstellung einer Dekorfolie sowie ein Verfahren zur Dekoration eines Zielsubstrats mit einer Dekorfolie.

Es ist bekannt, Dekorfolien zur Applizierung einer Gesamtlackschicht auf beispielsweise Sicherheitsdokumente, wie Reisepässe, Kreditkarten oder Banknoten zu verwenden. Hierfür werden insbesondere Laminierfolien, Heißprägefolien und/oder Kaltprägefolien eingesetzt. Dabei wird eine Gesamtlackschicht der Dekorfolie auf ein Zielsubstrat übertragen und anschließend die Trägerfolie der Dekorfolie abgelöst. Bei einer derartigen Übertragung der Gesamtlackschicht einer Dekorfolie von einer Trägerfolie auf ein Zielsubstrat wird die Gesamtlackschicht entlang einer Grenzlinie, die den zu übertragenden Teilbereich der Gesamtlackschicht definiert, zerrissen. Dieser Teilbereich kann insbesondere durch eine auf das Zielsubstrat aufgebrachte Kleberschicht definiert werden, die die Gesamtlackschicht mit dem Zielsubstrat verbindet. Die aufgebrachte Kleberschicht ist dabei insbesondere nur teilweise aufgebracht und kann beispielsweise musterförmig ausgestaltet sein. Idealerweise reißt die Dekorfolie am äußeren Rand der Kleberschicht. Jedoch kann es, je nach Aufbau und Zusammensetzung der Dekorfolie beispielsweise zu undefinierten Rissen der Gesamtlackschicht fern des äußeren Randes der Kleberschicht führen, wodurch eine unsaubere Dekoration erfolgt.

Aus der EP 2 172 347 A2 ist eine in einem Kalttransferverfahren verwendbare Transferfolie mit einer Trägerfolie und einer von der Trägerfolie ablösbaren Transferlage bekannt.

Aus der DE 10 2015 121 849 A1 ist ein Verfahren zur Herstellung eines Sicherheitselements sowie eine Transferfolie bekannt.

Der Erfindung liegt nun die Aufgabe zugrunde, eine verbesserte Dekorfolie, ein verbessertes Verfahren zur Herstellung einer Dekorfolie sowie ein verbessertes Verfahren zur Dekoration eines Zielsubstrats anzugeben.

Die Aufgabe wird von einer Dekorfolie, insbesondere Laminierfolie, Kaltprägefolie oder Heißprägefolie gemäß dem Patentanspruch 1 gelöst.

Diese Aufgabe wird weiter von einem Verfahren zur Herstellung einer Dekorfolie gemäß dem Patentanspruch 16 gelöst.

Vorzugsweise ist vorgesehen, dass zumindest ein Teilbereich des zumindest einen Bereichs auf zumindest einer Oberfläche der zumindest einen Oberfläche der Trägerfolie angeordnet ist, wobei dieser zumindest eine Oberfläche der zumindest einen Oberfläche der Trägerfolie zumindest teilweise überdeckt.

Ferner wird diese Aufgabe von einem Verfahren zur Dekoration eines Zielsubstrats gemäß dem Patentanspruch 19 gelöst.

Vorzugsweise ist vorgesehen, dass zumindest ein Teilbereich des zumindest einen Bereich auf zumindest einer Oberfläche der zumindest einen Oberfläche des Zielsubstrats angeordnet ist, wobei dieser zumindest eine Oberfläche der zumindest einen Oberfläche des Zielsubstrats zumindest teilweise überdeckt.

Überraschenderweise hat sich bei Untersuchungen gezeigt, dass mit der vorliegenden Erfindung eine verbesserte Deckkraft und eine sauberere Ausprägung der Dekoration im Vergleich zu herkömmlichen Dekorfolien erzielt wird, da aufgrund der verringerten Trägerfoliendicke die Anrisskraft sowie die Fortrisskraft reduziert werden und diese maßgebend für eine hochwertige Dekoration des Zielsubstrats sind. Beim Abziehen der Trägerfolie von der Gesamtlackschicht wird die Trägerfolie gebogen, sodass Spannungen insbesondere über den gesamten Querschnitt der Dekorfolie resultieren. Durch die verringerte Trägerfoliendicke können diese Spannungen reduziert werden und die resultierende Anrisskraft und Fortrisskraft verringern sich ebenfalls. Weiter nehmen die Schwankungen der Kraftamplitude der Fortrisskraft signifikant ab, was das Ablöseverhalten weiter verbessert und eine saubere Dekoration begünstigt.

Weiterhin wird durch eine Dekorfolie mit einer Trägerfoliendicke im Bereich von 3,0 µm bis 10,0 µm die Menge des Kunststoffabfalls im Vergleich zu herkömmlichen Dekorfolien reduziert.

Zudem ergibt sich weiter der Vorteil, dass bei gleichbleibenden Folienrollendurchmesser längere Folienbahnen aufgewickelt werden können. Dies ist insbesondere in der Logistik und beim Transport vorteilhaft.

Vorteilhafte Ausführungsbeispiele der Erfindung sind in den Unteransprüchen bezeichnet.

Erfindungsgemäß ist, dass die Gesamtlackschicht eine Dicke im Bereich von 1,0 µm bis 2,5 µm aufweist. Es hat sich gezeigt, dass bei einer derartigen Schichtdicke die Gesamtlackschicht besonders gut an den vordefinierten Kanten, die durch den äußeren Rand der Kleberschicht definiert sind, brechen. Damit kann eine saubere Dekoration der Dekorfolie auf das Zielsubstrat erreicht werden.

Vorzugsweise liegt das Verhältnis der Trägerfoliendicke zu Gesamtlackschichtdicke in einem Bereich von 1,8:1 bis 7,0:1, bevorzugt von 2,5:1 bis 5,8:1, wobei die Trägerfolie eine Dicke in einem Bereich von größer oder gleich 3 µm bis kleiner oder gleich 7 µm aufweist und/oder das Verhältnis der Trägerfoliendicke zu Gesamtlackschichtdicke in einem Bereich von 4,1:1 bis 10,0:1, bevorzugt von 4,4:1 bis 8,3:1, liegt, wobei die Trägerfolie eine Dicke in einem Bereich von größer oder gleich 7 µm bis kleiner oder gleich 10 µm aufweist. Derartige Verhältnisse begünstigen ein gutes Ablöseverhalten der Trägerfolie von der Gesamtlackschicht. Dies, da bei derartigen Verhältnissen beim Abziehen der Trägerfolie von der Gesamtlackschicht geringere Spannungen auftreten als bei herkömmlichen Dekorfolien. Dies verbessert auch die Dekorationsqualität.

Bei Verwendung einer Dekorfolie mit den angegebenen Verhältnissen von Trägerfoliendicke zu Gesamtlackschichtdicke hat sich insbesondere gezeigt, dass die Prägequalität und die Prägeperformance deutlich verbessert im Vergleich zu Dekorfolien, deren Verhältnis der Trägerfoliendicke zu Gesamtlackschichtdicke sich außerhalb des angegebenen Bereichs befindet, sind.

Insbesondere umfasst die Trägerfolie ein Material oder eine Materialkombination, ausgewählt aus: PET, PMMA, PC, PE, PVC, PS, ABS, PU, PBS, PLA, PAN und/oder Glas.

Es ist insbesondere vorgesehen, dass die Gesamtlackschicht zumindest eine Ablöseschicht und/oder zumindest eine Schutzlackschicht und/oder zumindest eine Grundierungsschicht und/oder zumindest eine Kleberschicht und/oder zumindest eine Farbschicht aufweist.

Bevorzugt umfasst zumindest eine Ablöseschicht der zumindest einen Ablöseschicht ein Material oder eine Materialkombination, ausgewählt aus: Wachse, Silikone, Polyurethane und/oder Polymere, bevorzugt Acrylat-Copolymer, Polyester-Copolymere, Polystyrol-Copolymere, Polycarbonat-Copolymere.

Die Fortrisskraft gibt die Kraft an, die aufzuwenden ist, um zwei Schichten voneinander zu lösen; zwischen der Fortrisskraft einer ersten Schicht von einer zweiten Schicht und der Haftung zwischen der ersten und der zweiten Schicht besteht eine positive Korrelation.

Die Haftung von zumindest einer Farbschicht der zumindest einen Farbschicht auf zumindest einen Bereich der Gesamtlackschicht der Dekorfolie, die auf ein Zielsubstrat übertragen wurden, wurde sofort nach dem Bedrucken und einen Tag nach dem Bedrucken mittels des folgenden Tesatests bei Raumtemperatur bestimmt:
Ein Testmuster in Form eines Zielsubstrats mit der darauf aufgebrachten Gesamtlackschicht und einer Bedruckung zumindest einer Farbschicht auf zumindest einen Bereich der Gesamtlackschicht wurde in einer Materialprüfmaschine der Fa. ZwickRoell GmbH & Co. KG des Typs Z005 angeordnet. Ein 13 bis 16 cm langer Streifen Tesafilm der Marke Tesa und des Typs 4104 mit einer Breite von 19 mm wurde auf das Testmuster aufgeklebt, so dass etwa 5 cm bis 7 cm des Tesafilms über den Rand des Substrats überstanden. Nachfolgend wurde der Tesafilm mit dem Daumen drei Mal bis vier Mal angedrückt und schließlich in einem Abzugswinkel von 90° mit einer Geschwindigkeit von 500 mm/min vom Testmuster abgezogen und dabei diejenige Kraft gemessen, die notwendig war, um die zumindest eine Farbschicht der zumindest einen Farbschicht von der Gesamtlackschicht zu lösen. Der Test galt als bestanden, wenn 90% der Druckfarbe auf dem Testmuster verblieb oder das Testmuster selbst zerrissen ist.

Bedruckungen einer Gesamtlackschicht mit konventionellen Druckfarben, insbesondere mit den bereits oben genannten UV-härtenden Druckfarben, UV-härtenden Lacken, Hybridfarben oder Hybridlacken und/oder oxidativ härtenden Druckfarben und/oder migrationsarmen Farben (LMI- oder MGA-Farben, LMI = low migration, MGA = migrationsarm), hafteten sehr gut auf der Transferlage, so dass der Test als sehr gut bestanden gewertet werden konnte.

Es ist bevorzugt vorgesehen, dass die Gesamtlackschicht auf zumindest einer Oberfläche zumindest eine Farbschicht aufweist, wobei die Haftkraft zwischen zumindest einer Farbschicht der zumindest einen Farbschicht und der Gesamtlackschicht mindestens 25 cN, bevorzugt mindestens 30 cN, beträgt.

Bevorzugt weist zumindest eine Ablöseschicht der zumindest einen Ablöseschicht eine Dicke im Bereich von 0,01 µm bis 0,50 µm, bevorzugt von 0,10 µm bis 0,30 µm, auf. Diese vergleichsweise geringe Dicke der Ablöseschicht erlaubt ein randscharfes und sauberes Ablösen der Gesamtlackschicht von der Trägerfolie. Die dabei erzielbare Genauigkeit und die dabei erzielbare Auflösung kann vergleichsweise genau dem Layout der partiell, vorzugsweise auf dem Zielsubstrat, aufgebrachten zumindest einen Kleberschicht der zumindest einen Kleberschicht entsprechen, ohne wesentlich davon abzuweichen, wodurch eine hohe Registerhaltigkeit des Folienlayouts zu einem eventuell vorhandenen Drucklayout aus konventionellen Druckfarben erreichbar ist.

Unter Register oder Passer bzw. Registergenauigkeit oder Passergenauigkeit ist bevorzugt eine Lagegenauigkeit zweier oder mehrerer Elemente und/oder Schichten zu verstehen.

Dabei soll sich die Registergenauigkeit innerhalb einer vorgegebenen Toleranz bewegen und dabei möglichst gering sein. Gleichzeitig ist die Registergenauigkeit von mehreren Elementen, Schichten, Teilbereichen relativ zueinander ein wichtiges Merkmal, um die Prozesssicherheit zu erhöhen.

Die lagegenaue Positionierung erfolgt dabei insbesondere mittels Markierungen, insbesondere mittels sensorisch, vorzugsweise optisch detektierbarer Passermarken oder Registermarken. Diese Markierungen, insbesondere Passermarken oder Registermarken, stellen dabei vorzugsweise entweder spezielle separate Elemente oder Bereiche oder Schichten dar oder sind vorzugsweise selbst Teil der zu positionierenden Elemente oder Bereiche oder Schichten.

Bei dieser randscharfen partiellen Ablösung entstehen durch die geringe Dicke der Ablöseschicht nur sehr kleine und sehr wenige sogenannte Flakes, also kleine Schichtreste der Gesamtlackschicht der Dekorfolie, die in nachfolgenden Prozessschritten störend sein können und/oder das optische Erscheinungsbild des beschichteten Zielsubstrates stören können. Durch die vergleichsweise geringe Dicke der Ablöseschicht sind Auflösungen erreichbar, die unterhalb des Auflösungsvermögens des menschlichen Auges liegen.

Insbesondere ist es vorteilhaft, wenn zumindest eine Ablöseschicht der zumindest einen Ablöseschicht transparent und/oder transluzent und/oder opak und/oder eingefärbt und/oder zumindest teilweise eingefärbt und/oder glasklar ausgebildet ist.

Bevorzugt umfasst zumindest eine Schutzlackschicht der zumindest einen Schutzlackschicht ein Material oder eine Materialkombination, ausgewählt aus: Polymere, insbesondere Acrylat-Copolymere, Polyester-Copolymere, Polystyrol-Copolymere, Polycarbonat-Copolymere und/oder SMA-Copolymere (SMA = Styrol-Maleinsäure-Anhydrid).

Zum Erreichen einer hohen Deckkraft ist es insbesondere vorteilhaft, wenn die Schichten der Gesamtlackschicht langkettige, insbesondere hochmolekulare, Polymere aufweisen. Jedoch ist es zum Erreichen einer sauberen Ausprägung bevorzugt vorteilhaft, wenn die Schichten der Gesamtlackschicht kurzkettige, insbesondere niedrigmolekulare, Polymere aufweisen. Um beide Vorteile miteinander zu vereinen, ist es insbesondere vorgesehen, dass die Polymere, insbesondere Acrylat-Copolymere, Polyester-Copolymere, Polycarbonat-Copolymere, Polystyrol-Copolymere und/oder SMA-Copolymere und/oder Kombinationen daraus, der Gesamtlackschicht eine molare Masse im Bereich von 1000 g/mol bis 100000 g/mol, bevorzugt von 3000 g/mol bis 35000 g/mol, aufweisen.

Die Deckkraft ist dabei ein Maß für die Anzahl der Defekte eines mit einer zusammenhängenden Vollfläche dekorierten Zielsubstrats. Bei einer 100%-igen Deckkraft treten demzufolge keine Defekte bzw. Löcher innerhalb dieser Vollfläche auf dem dekorierten Zielsubstrat auf. Die Defekte können dabei mikroskopisch, also für das menschliche Auge nicht auflösbar, oder makroskopisch, also für das menschliche Auge auflösbar, auftreten. Eine geringe und homogene Fortrisskraft ermöglicht eine hohe Deckkraft der Dekoration.

Bevorzugt weist zumindest eine Schutzlackschicht der zumindest einen Schutzlackschicht eine Dicke im Bereich von 0,5 µm bis 3 µm, insbesondere von 0,8 µm bis 1,3 µm, auf.

Die Schutzlackschicht stellt insbesondere einen Schutz vor mechanischer und/oder chemischer Beanspruchung der Gesamtlackschicht auf einem Zielsubstrat dar.

Es ist bevorzugt möglich, dass zumindest eine Schutzlackschicht der zumindest einen Schutzlackschicht transparent und/oder transluzent und/oder opak und/oder eingefärbt und/oder zumindest teilweise eingefärbt und/oder glasklar ausgebildet ist.

Es ist insbesondere vorgesehen, dass zumindest eine Dekorschicht der zumindest einen Dekorschicht zumindest eine metallische Schicht und/oder zumindest eine dielektrische Schicht umfasst.

Erfindungsgemäß weist zumindest eine Dekorschicht der zumindest einen Dekorschicht eine Dicke im Bereich von 8 nm bis 500 nm auf. Um bei Verwendung eines UV-Klebers als Kaltkleber die gewünschte hohe UV-Durchlässigkeit der Dekorfolie auch bei einer Dekorschicht in Form einer metallischen Schicht zu erzielen, ist es besonders bevorzugt, wenn die metallische Schicht lediglich eine Schichtdicke im Bereich von 8 nm bis 60 nm, bevorzugt im Bereich von 10 nm bis 30 nm, aufweist. So werden eine gute Sichtbarkeit und dekorative Wirkung der metallischen Schicht in Kombination mit einer hohen Durchlässigkeit für UV-Strahlung erreicht (OD = optische Dichte, optical density ca. 1,2).

Um ein ausreichendes Härten eines UV-Klebers zu erreichen, ist insbesondere vorgesehen, dass die Dekorfolie für UV-Strahlung im Wellenlängenbereich von 250 nm bis 400 nm eine Durchlässigkeit im Bereich von 5% bis 70%, insbesondere von 10% bis 40%, aufweist. Dadurch wird ein besonders schnelles und insbesondere ausreichendes Härten eines Kaltklebers auf Basis eines unter UV-Bestrahlung vernetzenden Klebers auf dem Zielsubstrat möglich, wodurch die Haftung der Gesamtlackschicht am Zielsubstrat noch weiter verbessert wird. Denn erst bei ausreichend hoher Bestrahlungsmenge wird der unter UV-Bestrahlung vernetzende Kleber vollständig vernetzt und ausgehärtet und erzielt eine hohe Klebkraft, so dass ein Ablösen der auf das Zielsubstrat übertragenen Gesamtlackschichtbereiche vom Zielsubstrat zuverlässig verhindert wird. Maßgebend für die UV-Durchlässigkeit einer Dekorfolie ist hierbei die Schicht einer Dekorfolie, welche die niedrigste UV-Durchlässigkeit aller vorhandenen Schichten aufweist.

Es ist insbesondere vorgesehen, dass zumindest eine metallische Schicht der zumindest einen metallischen Schicht ein Material oder eine Materialkombination umfasst, ausgewählt aus: Aluminium, Silber, Gold, Kupfer, Nickel, Chrom und/oder einer Legierung umfassend mindestens zwei dieser Metalle.

Bevorzugt umfasst zumindest eine dielektrische Schicht der zumindest einen dielektrischen Schicht ein Material oder eine Materialkombination, ausgewählt aus: Metalloxid, Polymer, Lack und/oder HRI-Material (HRI = High Refractive Index), insbesondere MgO, TiOₙ, Al₂O₃, ZnO, ZnS und/oder SiOₙ, wobei die Variable n vorzugsweise im Bereich von größer oder gleich 0 bis kleiner oder gleich 3 liegt.

Es ist insbesondere vorgesehen, dass zumindest eine Dekorschicht der zumindest einen Dekorschicht auch aus einem HRI-Material (HRI = High Refractive Index) gebildet ist, das insbesondere zumindest für Teilbereiche des Spektrums im UV-Bereich strahlendurchlässig ist, wie CdSe, CeTe, Ge, HfO₂, PbTe, Si, Te, TiCl oder ZnTe.

Es hat sich bewährt, wenn eine Dekorschicht eine diffraktive und/oder refraktive Reliefstruktur zur Erzeugung optisch variabler Effekte und/oder eine Makrostruktur zur Erzeugung von dreidimensionalen Effekten oder Tiefeneffekten aufweist. Durch diffraktive und/oder refraktive Reliefstrukturen, die insbesondere in einer transparenten Lackschicht bzw. Replizierlackschicht ausgebildet werden, können abhängig vom Blickwinkel unterschiedliche optische Effekte, sogenannte optisch variable Effekte, erzielt werden, wie Hologramme, dreidimensionale Darstellungen mit blickwinkelabhängigem, kinematischem Effekt, usw.

Um die Sichtbarkeit von Reliefstrukturen zu verbessern, werden diese meist angrenzend an eine stark reflektierende metallische Schicht und/oder dielektrische HRI-Schicht (HRI = High Refractive Index) mit vergleichsweise hohem bis sehr hohem Brechungsindex, insbesondere aus einem Metalloxid, angeordnet. Bevorzugt ist eine solch hoch reflektierende Schicht vollflächig oder musterförmig ausgebildet.

Es ist daher insbesondere vorgesehen, dass zumindest eine Dekorschicht der zumindest einen Dekorschicht zumindest eine Replizierlackschicht mit einer in zumindest eine Replizierlackschicht der zumindest einen Replizierlackschicht abgeformten Oberflächenstruktur aufweist, insbesondere ausgewählt aus: diffraktive Oberflächenstruktur, refraktive Oberflächenstruktur, Linsenstruktur, Mattstruktur und/oder Blaze-Gitter.

Es ist insbesondere weiter möglich, dass zumindest eine Dekorschicht der zumindest einen Dekorschicht zumindest eine einen optisch variablen Effekt generierende Schicht aufweist.

Bevorzugt weist zumindest eine Dekorschicht der zumindest einen Dekorschicht zumindest eine Reflexionsschicht aufweist, insbesondere zumindest eine musterförmig in Form einer ersten Information ausgeformte Reflexionsschicht auf.

Es ist auch bevorzugt möglich, dass zumindest eine Dekorschicht der zumindest einen Dekorschicht zumindest eine musterförmig in Form einer zweiten Information ausgeformte Farbschicht aufweist.

Insbesondere weist zumindest eine Dekorschicht der zumindest einen Dekorschicht zumindest ein Dünnfilmschichtelement zur Generierung eines blickwinkelabhängigen Farbverschiebungseffekts auf.

Ferner ist auch bevorzugt vorgesehen, dass zumindest eine Dekorschicht der zumindest einen Dekorschicht mit optisch variablen Pigmenten, lumineszierenden Stoffen, magnetischen oder elektrisch leitenden Stoffen, eine Farblackschicht, ein Dünnfilmstapel mit blickwinkelabhängigem Interferenzfarbeffekt, eine Flüssigkristallschicht, oder auch eine Kombination von vorstehend genannten Schichten umfassend metallische Schichten, dielektrische Schichten usw., als zumindest eine Dekorschicht der zumindest einen Dekorschicht ausgestaltet ist.

Bevorzugt ist vorgesehen, dass zumindest eine Grundierungsschicht der zumindest einen Grundierungsschicht eine Dicke im Bereich von 0,1 µm bis 2 µm, bevorzugt von 0,2 µm bis 0,8 µm, aufweist.

Insbesondere ist zumindest eine Grundierungsschicht der zumindest einen Grundierungsschicht transparent und/oder transluzent und/oder opak und/oder eingefärbt und/oder zumindest teilweise eingefärbt und/oder glasklar ausgebildet. Insbesondere wenn zumindest eine Grundierungsschicht der zumindest einen Grundierungsschicht zumindest teilweise eingefärbt oder eingefärbt ausgebildet ist, wird der Kontrast zum Zielsubstrat verstärkt und ein besonders hochwertiger optischer Eindruck bzw. Effekt bewirkt.

Es ist weiter bevorzugt vorgesehen, dass zumindest eine Grundierungsschicht der zumindest einen Grundierungsschicht eine Oberflächenrauhigkeit im Bereich von 100 nm bis 200 nm, bevorzugt von 120 nm bis 160 nm, aufweist. Die Oberflächenrauhigkeit wird unter anderem durch das Auftragsverfahren und die Formulierung der Grundierungsschicht bestimmt. Es wurde festgestellt, dass eine geringere Oberflächenrauhigkeit, überraschender Weise jedoch auch eine höhere Oberflächenrauhigkeit der Grundierungsschicht, zu einer Verminderung der erzielbaren Haftung zwischen einem Kaltkleber und der Transferlage bzw. Gesamtlackschicht führt. Die Oberflächenrauhigkeit der Grundierungsschicht wurde mittels einer Interferenzmikroskopie bestimmt.

Zudem ist es beispielsweise möglich, dass die Gesamtlackschicht mehrere Grundierungsschichten umfasst, die in ihren chemischen und/oder physikalischen Eigenschaften unterschiedlich sind, sodass zu den angrenzenden Schichten die optimale Haftung ausgebildet wird. So ist es beispielsweise möglich auf der einen Seite eine optimale Haftung in Richtung zumindest einer Dekorschicht der zumindest einen Dekorschicht und auf der anderen Seite eine optimale Haftung in Richtung zumindest einer Kleberschicht der zumindest einen Kleberschicht zu erzielen.

Es wird insbesondere eine tesafeste Haftung (Tesatest, siehe oben) zwischen der Transferlage und dem Substrat erreicht, wobei bei Verwendung eines konventionell trocknenden Kaltklebers der Tesatest bereits nach wenigen Minuten und bei Verwendung eines UV-Klebers der Tesatest unmittelbar nach der Bestrahlung mit UV-Licht als bestanden gewertet werden konnte. Es verblieben über 90% der Transferlage am Zielsubstrat.

Es ist insbesondere vorgesehen, dass zumindest eine Kleberschicht der zumindest einen Kleberschicht zumindest einen ersten Bereich der Gesamtlackschicht zumindest teilweise oder vollflächig überdeckt.

Bevorzugt bedeckt zumindest eine Kleberschicht der zumindest einen Kleberschicht zumindest einen zweiten Bereich der Gesamtlackschicht nicht, insbesondere wobei zumindest ein zweiter Bereich des zumindest einen zweiten Bereich zumindest einen ersten Bereich des zumindest einen ersten Bereich nicht oder zumindest teilweise oder vollflächig überlappt.

Es ist bevorzugt vorgesehen, dass zumindest ein erster Bereich des zumindest einen ersten Bereichs und/oder zumindest ein zweiter Bereich des zumindest einen zweiten Bereichs zumindest eines der folgenden Designelemente oder eine Kombinationen der folgenden Designelemente umfasst: Alphanumerisches Zeichen, Schriftzeichen, Symbol, Mikroschrift, Bild, Foto, Logo, Portrait, Piktogramm, Muster, insbesondere Endlosmuster, Raster, insbesondere periodisches Raster, amplitudenmoduliertes Raster, Punktraster, Linienraster, Motiv.

Es ist bevorzugt auch möglich, dass zumindest eine Kleberschicht der zumindest einen Kleberschicht aus einem Heißkleber und/oder einem thermoplastischen Kleber und/oder einem Kaltkleber und/oder einem strahlungshärtbaren Kleber, insbesondere einem mittels elektromagnetischer Strahlung und/oder Elektronenstrahlung und/oder mittels UV-Strahlung härtbaren Kleber, und/oder einem oxidativ härtenden Kleber und/oder einem migrationsarmen Kleber (LMI- und/oder MGA-Kleber, LMI = low migration, MGA = migrationsarm) gebildet ist.

Wie bereits im Stand der Technik dargelegt, reißt die Gesamtlackschicht idealerweise am äußeren Rand, insbesondere an dem in Vorschubrichtung vorderen Rand, zumindest einer Kleberschicht der zumindest einen Kleberschicht. Die Kraft, die für den Anriss der Gesamtlackschicht aufgewendet werden muss, wird als Anrisskraft bezeichnet. Die Kraft, die für den Abriss der Gesamtlackschicht an dem in Vorschubrichtung hinteren Rand zumindest einer Kleberschicht der zumindest einen Kleberschicht aufgewendet werden muss, wird als Abrisskraft bezeichnet.

Nachdem die Gesamtlackschicht an den vordefinierten Stellen gerissen bzw. gebrochen ist, erfolgt sodann die Dekoration der gewünschten Fläche durch Ablösen der Gesamtlackschicht von der Trägerfolie. Die hierfür benötigte Kraft wird als Fortrisskraft bezeichnet. Die Fortrisskraft ist also jene Kraft, die benötigt wird, um die Gesamtlackschicht von der Trägerfolie zu trennen bzw. analog hierzu die Trägerfolie von dem auf zumindest einer Kleberschicht der zumindest einen Kleberschicht anhaftenden Gesamtlackschicht zu trennen. Eine geringe und homogene Fortrisskraft über die gesamte zu dekorierende Fläche bzw. Bereich ermöglicht eine hohe Deckkraft und eine saubere Ausprägung.

Demzufolge ist es insbesondere vorgesehen, dass die Fortrisskraft der Gesamtlackschicht von der Trägerfolie in einem Bereich von 2 cN bis 8 cN liegt.

In der Regel ist die Fortrisskraft im Mittel konstant, jedoch kann es aufgrund von Ungleichmäßigkeiten im Schichtaufbau der Gesamtlackschicht zu Schwankungen der Fortrisskraft führen. Diese Schwankungen der Kraftamplitude der Fortrisskraft gilt es so klein wie möglich zu halten, sodass von einer homogenen Fortrisskraft gesprochen werden und eine hohe Deckkraft erzielt werden kann. Aus diesem Grund ist es insbesondere zweckmäßig, wenn die Fortrisskraft Schwankungen der Kraftamplitude um ihren Mittelwert in einem Bereich von größer oder gleich -0,5 cN bis kleiner oder gleich 0,5 cN aufweist.

Weiter kann durch eine geringe und homogene Fortrisskraft die Qualität der Dekoration verbessert werden. Man spricht hier auch von Point Perception. Die Point Perception ist bevorzugt ein Indikator für eine punktgenaue Foliendekoration für einzeln aufgebrachte Kleberpunkte. Punktgenau bedeutet in diesem Zusammenhang, dass die Dekoration den gesamten Kleberpunkt bedeckt und dabei nicht über den Kleberpunkt hinausragt. Demzufolge ist es bevorzugt, wenn die Gesamtlackschicht eine Deckkraft bei Dekoration einer zusammenhängenden Vollfläche von größer oder gleich 99,5%, bevorzugt von 100%, und eine Dekoration bzw. Point Perception bei Dekoration eines 10%-Rastertonfeldes von größer oder gleich 99,5%, bevorzugt von 100%, aufweist. Bei einem 10%-Rastertonfeld wird eine beliebige Fläche eines Zielsubstrats derart mit Kleberpunkten versehen, sodass 10% der beliebigen Fläche des Zielsubstrats mit Kleberpunkten bedeckt ist. Vorzugsweise sind die Kleberpunkte äquidistant, musterförmig, rasterförmig und/oder beabstandet zueinander angeordnet.

Für das Verfahren zur Herstellung einer Dekorfolie ist es insbesondere vorgesehen, dass das Verhältnis der Dicke der Trägerfolie zu der Dicke der Gesamtlackschicht in einem Bereich von 1,8:1 bis 7,0:1, bevorzugt von 2,5:1 bis 5,8:1, liegt, wobei die Trägerfolie eine Dicke in einem Bereich von größer oder gleich 3 µm bis kleiner oder gleich 7 µm aufweist und/oder dass das Verhältnis der Dicke der Trägerfolie zu der Dicke der Gesamtlack in einem Bereich von 4,1:1 bis 10,0:1, bevorzugt von 4,4:1 bis 8,3:1, wobei die Trägerfolie eine Dicke in einem Bereich von größer oder gleich 7 µm bis kleiner oder gleich 10 µm aufweist.

Erfindungsgemäß ist, dass die Gesamtlackschicht im Schritt b) eine Dicke im Bereich von 1,0 µm bis 2,5 µm aufweist.

Weiter ist es bevorzugt vorgesehen, dass die Gesamtlackschicht im Schritt b) zumindest eine Ablöseschicht und/oder zumindest eine Schutzlackschicht und/oder zumindest eine Grundierungsschicht und/oder zumindest eine Kleberschicht und/oder zumindest eine Farbschicht aufweist.

Bevorzugt wird im Schritt b) zumindest eine Ablöseschicht der zumindest einen Ablöseschicht und/oder zumindest eine Schutzlackschicht der zumindest einen Schutzlackschicht und/oder zumindest eine Dekorschicht der zumindest einen Dekorschicht und/oder zumindest eine Grundierungsschicht der zumindest einen Grundierungsschicht und/oder zumindest eine Kleberschicht der zumindest einen Kleberschicht und/oder zumindest eine Farbschicht der zumindest einen Farbschicht mittels Tiefdruck und/oder Siebdruck und/oder Hochdruck und/oder Tampondruck und/oder Inkjetdruck und/oder Offsetdruck und/oder Flexodruck und/oder Gusstechniken aufgebracht.

Weiter ist es bevorzugt vorgesehen, dass im Schritt b) die zumindest eine Kleberschicht als ein Heißkleber, ein thermoplastischer Kleber, ein Kaltkleber, ein strahlungshärtbarer Kleber, insbesondere ein mittels elektromagnetischer Strahlung und/oder Elektronenstrahlung und/oder mittels UV-Strahlung härtbarer Kleber, oder ein oxidativ härtender Kleber und/oder ein migrationsarmer Kleber aufgebracht wird.

Es ist insbesondere möglich, dass der Schritt b) weiter folgenden Schritt umfasst und/oder nach dem Schritt b) weiter folgender Schritt durchgeführt wird:
c) Aufbringen zumindest einer Kleberschicht der zumindest einen Kleberschicht derart, dass zumindest eine Kleberschicht der zumindest einen Kleberschicht zumindest einen ersten Bereich der Gesamtlackschicht zumindest teilweise oder vollflächig überdeckt und/oder einen zweiten Bereich der Gesamtlackschicht nicht überdeckt, insbesondere wobei zumindest ein zweiter Bereich des zumindest einen zweiten Bereichs zumindest einen ersten Bereich des zumindest einen ersten Bereich nicht oder zumindest teilweise oder vollflächig überlappt.

Beispielsweise werden sodann die mit der Kleberschicht nicht überdeckten Bereiche nicht von der Dekorfolie dekoriert. So lassen sich beispielsweise Negativschriften und/oder Negativmuster erzeugen.

Insbesondere umfasst zumindest ein erster Bereich des zumindest einen ersten Bereichs und/oder zumindest ein zweiter Bereich des zumindest einen zweiten Bereichs zumindest eines der folgenden Designelemente oder eine Kombination der folgenden Designelemente: Alphanumerisches Zeichen, Schriftzeichen, Symbol, Mikroschrift, Bild, Foto, Logo, Portrait, Piktogramm, Muster, insbesondere Endlosmuster, Raster, insbesondere periodisches Raster, amplitudenmoduliertes Raster, Punktraster, Linienraster, Motiv.

Hinsichtlich des Verfahrens zur Dekoration eines Zielsubstrats ist es bevorzugt, wenn das Verfahren folgende Schritte, welche insbesondere in der folgenden Reihenfolge ausgeführt werden, umfasst:
d) Bereitstellen einer Dekorfolie,
e) Bereitstellen eines Zielsubstrats,
f) Aufbringen der Dekorfolie auf das Zielsubstrat.

Weiter ist es insbesondere vorgesehen, dass vor dem Schritt f) folgender Schritt ausgeführt wird:
g) Aufbringen zumindest einer Kleberschicht auf die Dekorfolie derart, dass zumindest eine Kleberschicht der zumindest einen Kleberschicht zumindest einen ersten Bereich der Gesamtlackschicht zumindest teilweise oder vollflächig überdeckt und/oder zumindest einen zweiten Bereich der Gesamtlackschicht nicht überdeckt, insbesondere wobei zumindest ein zweiter Bereich des zumindest einen zweiten Bereich zumindest einen ersten Bereich des zumindest einen ersten Bereich nicht oder zumindest teilweise oder vollflächig überlappt, und/oder Aufbringen zumindest einer Kleberschicht auf das Zielsubstrat derart, dass zumindest eine Kleberschicht der zumindest einen Kleberschicht zumindest einen dritten Bereich des Zielsubstrats zumindest teilweise oder vollflächig überdeckt und/oder zumindest einen vierten Bereich des Zielsubstrats nicht überdeckt, insbesondere wobei zumindest ein vierter Bereich des zumindest einen vierten Bereich zumindest einen dritten Bereich des zumindest einen dritten Bereich nicht oder zumindest teilweise oder vollflächig überlappt.

Der erste und zweite Bereich befinden sich vorzugsweise in einer von der Gesamtlackschicht aufgespannten Ebene. Dabei ist es insbesondere vorgesehen, dass die aufgespannte Ebene zumindest eine Oberfläche der Gesamtlackschicht umfasst. Der dritte und vierte Bereich befinden sich bevorzugt in einer von dem Zielsubstrat aufgespannten Ebene. Dabei ist es insbesondere vorgesehen, dass die aufgespannte Ebene zumindest eine Oberfläche des Zielsubstrats umfasst.

Bevorzugt können die ersten und zweiten Bereiche nebeneinander, beabstandet nebeneinander, teilweise überlappend und/oder vollflächig überlappend zueinander angeordnet sein. Ferner ist es insbesondere auch vorgesehen, dass die dritten und vierten Bereiche nebeneinander, beabstandet nebeneinander, teilweise überlappend und/oder vollflächig überlappend zueinander angeordnet sind.

Weiter ist es insbesondere vorgesehen, dass zumindest ein erster und/oder dritter Bereich des zumindest einen ersten und/oder dritten Bereichs und/oder zumindest ein zweiter und/oder vierter Bereich des zumindest einen zweiten und/oder vierten Bereichs zumindest eines der folgenden Designelemente oder eine Kombination der folgenden Designelemente umfasst: Alphanumerisches Zeichen, Schriftzeichen, Symbol, Mikroschrift, Bild, Foto, Logo, Portrait, Piktogramm, Muster, insbesondere Endlosmuster, Raster, insbesondere periodisches Raster, amplitudenmoduliertes Raster, Punktraster, Linienraster, Motiv.

Bevorzugt ist zumindest eine Kleberschicht der zumindest einen Kleberschicht in Schritt g) aus einem Heißkleber, einem thermoplastischen Kleber, einem Kaltkleber, einem strahlungshärtbaren Kleber, insbesondere einem mittels elektromagnetischer Strahlung und/oder Elektronenstrahlung und/oder mittels UV-Strahlung härtbaren Kleber, und/oder einem oxidativ härtenden Kleber und/oder einem migrationsarmen Kleber gebildet.

Bevorzugt wird im Schritt g) zumindest eine Kleberschicht der zumindest einen Kleberschicht mittels Tiefdruck und/oder Siebdruck und/oder Hochdruck und/oder Tampondruck und/oder Inkjetdruck und/oder Offsetdruck und/oder Flexodruck und/oder Gusstechniken aufgebracht.

Es ist insbesondere möglich, dass zumindest ein erster und/oder dritter Bereich des zumindest einen ersten und/oder dritten Bereichs von der Gesamtlackschicht dekoriert wird und/oder zumindest ein zweiter und/oder vierter Bereich des zumindest einen zweiten und/oder vierten Bereichs nicht von der Gesamtlackschicht dekoriert wird.

Weiter ist es bevorzugt möglich, dass zumindest ein erster und/oder dritter Bereich des zumindest einen ersten und/oder dritten Bereichs, welcher zumindest teilweise oder vollflächig von der zumindest einen Kleberschicht der zumindest einen Kleberschicht überdeckt ist, von der Gesamtlackschicht dekoriert wird.

Vorteilhafterweise ist es bevorzugt möglich, dass auf zumindest eine Oberfläche der Gesamtlackschicht nach dem Schritt f) zumindest eine Farbschicht aufgebracht wird, sodass die Haftkraft zwischen zumindest einer Farbschicht der zumindest einen Farbschicht und der Gesamtlackschicht mindestens 25 cN, bevorzugt von mindestens 30 cN, beträgt.

Bevorzugt ist es vorgesehen, dass die Gesamtlackschicht nach dem Schritt f) eine Deckkraft bei Dekoration einer zusammenhängenden Vollfläche von größer oder gleich 99,5%, bevorzugt von 100%, und eine Dekoration bzw. Point Perceptionbei Dekoration eines 10%-Rastertonfeldes von größer oder gleich 99,5%, bevorzugt von 100%, aufweist.

Weiter ist es insbesondere vorgesehen, dass nach dem Schritt f) weiter folgender Schritt ausgeführt wird:
Abziehen der Trägerfolie von der Gesamtlackschicht, wobei der Abziehwinkel zwischen der Trägerfolie und Gesamtlackschicht in einem Bereich von 0° bis 120°, vorzugsweise von 0° bis 90°, liegt.

Insbesondere ist es möglich, dass im Schritt f) und/oder nach dem Schritt f) weiter folgender Schritt durchgeführt wird:
h) Andrücken der Dekorfolie mit zumindest einen Andrückstempel und/oder zumindest einer Andrückwalze.

Ferner ist es bevorzugt vorgesehen, dass zumindest ein Andrückstempel des zumindest einen Andrückstempel und/oder zumindest eine Andrückwalze der zumindest einen Andrückwalze im Schritt h) als ein beheizter Flächen- und/oder Formstempel ausgestaltet ist und/oder eine beheizte Walze ausgestaltet ist, wobei diese/r zumindest eine Kleberschicht der zumindest einen Kleberschicht zumindest teilweise und/oder in zumindest einen ersten und/oder dritten Bereich des zumindest einen ersten und/oder dritten Bereichs aktiviert und die Dekorfolie mit dem Zielsubstrat verbindet.

Im Folgenden wird die Erfindung anhand von mehreren Ausführungsbeispielen unter Zuhilfenahme der beiliegenden Zeichnungen beispielhaft erläutert. Die gezeigten Ausführungsbeispiele sind daher nicht einschränkend zu verstehen.
- Fig. 1: zeigt eine Schnittdarstellung einer Dekorfolie
- Fig. 2: zeigt eine weitere Schnittdarstellung einer Dekorfolie
- Fig. 3: zeigt eine Schnittdarstellung eines Zielsubstrats, wobei auf dem Zielsubstrat zumindest eine Kleberschicht aufgebracht ist
- Fig. 4: zeigt eine Schnittdarstellung eines dekorierten Zielsubstrats
- Fig. 5: zeigt eine weitere Schnittdarstellung eines dekorierten Zielsubstrats
- Fig. 6: zeigt eine schematische Darstellung eines Verfahrens zur Herstellung einer Dekorfolie
- Fig. 7: zeigt eine schematische Darstellung eines Verfahrens zur Dekoration eines Zielsubstrats
- Fig. 8: zeigt eine schematische Darstellung eines Verfahrens zur Dekoration eines Zielsubstrats
- Fig. 9a: zeigt die Fortrisskraftmessung für eine Dekorfolie mit einer Trägerfoliendicke von 5,7 µm
- Fig. 9b: zeigt die Fortrisskraftmessung für eine Dekorfolie mit einer Trägerfoliendicke von 12 µm
- Fig. 10a: zeigt das dekorierte 10%-Rastertonfeld einer Dekorfolie mit einer Trägerfoliendicke von 5,7 µm
- Fig. 10b: zeigt das dekorierte 10%-Rastertonfeld einer Dekorfolie mit einer Trägerfoliendicke von 12 µm
- Fig. 11a: zeigt eine schematische Darstellung einer Dekorfolie mit einer Trägerfoliendicke von 5,7 µm, wobei eine neutrale Faser eingezeichnet ist
- Fig. 11b: zeigt eine schematische Darstellung einer Dekorfolie mit einer Trägerfoliendicke von 12 µm, wobei eine neutrale Faser eingezeichnet ist

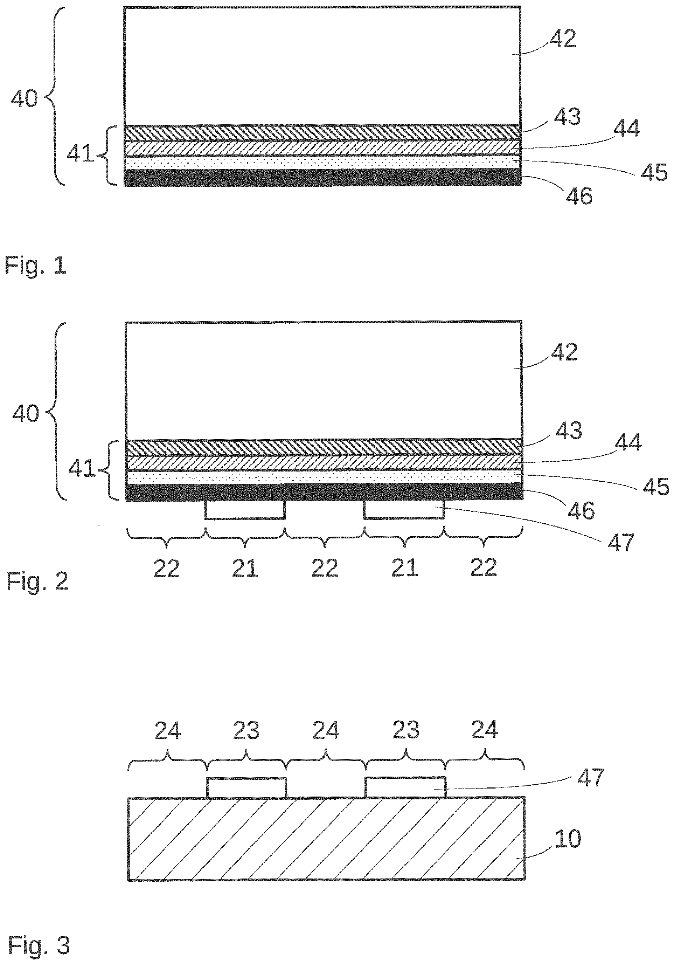

Fig. 1 zeigt eine Schnittdarstellung einer Dekorfolie 40, insbesondere Laminierfolie, Kaltprägefolie oder Heißprägefolie, umfassend eine Trägerfolie 42 und eine Gesamtlackschicht 41, wobei die Trägerfolie eine Dicke im Bereich von 3,0 µm bis 10,0 µm aufweist.

Es ist insbesondere möglich, dass die Gesamtlackschicht 41 eine Dicke im Bereich von 1,0 µm bis 2,5 µm, insbesondere von 1,0 µm bis 1,7 µm, aufweist.

In dieser Ausführungsvariante umfasst die Gesamtlackschicht 41 eine Ablöseschicht 43, eine Schutzlackschicht 44, eine Dekorschicht 45 und eine Grundierungsschicht 46. In einer alternativen Ausführungsvariante ist bevorzugt vorgesehen, dass die Gesamtlackschicht 41 zumindest eine Ablöseschicht 43 und/oder zumindest eine Schutzlackschicht 44 und/oder zumindest eine Dekorschicht 45 und/oder zumindest eine Grundierungsschicht 46 und/oder zumindest eine Kleberschicht 47 und/oder zumindest eine Farbschicht aufweist.

Es ist bevorzugt, dass das Verhältnis der Trägerfoliendicke zu Gesamtlackschichtdicke in einem Bereich von 1,8:1 bis 7,0:1, bevorzugt von 2,5:1 bis 5,8:1, liegt, wobei die Trägerfolie 42 eine Dicke in einem Bereich von größer oder gleich 3 µm bis kleiner oder gleich 7 µm aufweist und/oder dass das Verhältnis der Trägerfoliendicke zu Gesamtlackschichtdicke in einem Bereich von 4,1:1 bis 10,0:1, bevorzugt von 4,4:1 bis 8,3:1, wobei die Trägerfolie 42 eine Dicke in einem Bereich von größer oder gleich 7 µm bis kleiner oder gleich 10 µm aufweist.

Es ist insbesondere vorteilhaft, wenn die Dekorfolie 40 für UV-Strahlung im Wellenlängenbereich von 250 nm bis 400 nm eine Durchlässigkeit im Bereich von 5% bis 70%, insbesondere von 10% bis 40%, aufweist.

Vorzugsweise umfasst die Trägerfolie 42 ein Material oder eine Materialkombination, ausgewählt aus: PET, PMMA, PC, PE, PVC, PS, ABS, PU PBS, PLA, PAN und/oder Glas.

Bevorzugt weist zumindest eine Ablöseschicht 43 der zumindest einen Ablöseschicht 43 eine Dicke im Bereich von 0,01 µm bis 0,50 µm, bevorzugt von 0,10 µm bis 0,30 µm, auf.

Vorzugsweise umfasst zumindest eine Ablöseschicht 43 der zumindest einen Ablöseschicht 43 ein Material oder eine Materialkombination, ausgewählt aus: Wachse, Silikone, Polyurethane und/oder Polymere, bevorzugt Acrylat-Copolymer, Polyester-Copolymer, Polycarbonat-Copolymer, Polystyrol-Copolymer.

Bevorzugt ist zumindest eine Ablöseschicht 43 der zumindest einen Ablöseschicht 43 transparent und/oder transluzent und/oder opak und/oder eingefärbt und/oder zumindest teilweise eingefärbt und/oder glasklar ausgebildet.

Die Schutzlackschicht 44 ist eine optionale Schicht, die insbesondere zum Schutz der Dekorschicht 45 vor mechanischer und/oder chemischer Beanspruchung dient. Die Schutzlackschicht 44 ist insbesondere eine Lackschicht auf Basis von Nitrocellulose und Acrylat-Polymeren, Polyester-Copolymer, Polycarbonat-Copolymer, Polystyrol-Copolymer und/oder SMA-Copolymere.

Bevorzugt weist zumindest eine Schutzlackschicht 44 der zumindest einen Schutzlackschicht 44 eine Dicke im Bereich von 0,5 µm bis 3 µm, insbesondere von 0,8 µm bis 1,3 µm, auf.

Vorzugsweise ist zumindest eine Schutzlackschicht 44 der zumindest einen Schutzlackschicht 44 transparent und/oder transluzent und/oder opak und/oder eingefärbt und/oder zumindest teilweise eingefärbt und/oder glasklar ausgebildet.

Es ist bevorzugt möglich, dass zumindest eine Schutzlackschicht 44 der zumindest einen Schutzlackschicht 44 ein Material oder eine Materialkombination umfasst, ausgewählt aus: Polymere, insbesondere Acrylat-Copolymere, Polyester-Copolymere, Polystyrol-Copolymere Polycarbonat-Copolymere, und/oder SMA-Copolymere.

Bevorzugt weisen die Polymere, insbesondere Acrylat-Copolymere und/oder SMA-Copolymere, Polyester-Copolymer, Polycarbonat-Copolymer, Polystyrol-Copolymer oder Kombinationen daraus, der Gesamtlackschicht 41 eine molare Masse im Bereich von 1000 g/mol bis 100000 g/mol, bevorzugt von 3000 g/mol bis 35000 g/mol, auf.

Es ist vorgesehen, dass zumindest eine Dekorschicht 45 der zumindest einen Dekorschicht 45 zumindest eine metallische Schicht und/oder zumindest eine dielektrische Schicht umfasst.

Weiter ist insbesondere vorgesehen, dass zumindest eine metallische Schicht der zumindest einen metallischen Schicht ein Material oder eine Materialkombination umfasst, ausgewählt aus: Aluminium, Silber, Gold, Kupfer, Nickel, Chrom und/oder einer Legierung umfassend mindestens zwei dieser Metalle.

Bevorzugt ist es möglich, dass zumindest eine dielektrische Schicht der zumindest einen dielektrischen Schicht ein Material oder eine Materialkombination umfasst, ausgewählt aus: Metalloxid, Polymer, Lack und/oder HRI-Material, insbesondere MgO, TiOₙ, Al₂O₃, ZnO, ZnS und/oder SiOₙ, wobei die Variable n vorzugsweise im Bereich von größer oder gleich 0 bis kleiner oder gleich 3 liegt.

Es ist bevorzugt vorgesehen, dass zumindest eine Dekorschicht 45 der zumindest einen Dekorschicht 45 eine Dicke im Bereich von 8 nm bis 500 nm, bevorzugt von 8 nm bis 60 nm, insbesondere bevorzugt von 10 nm bis 30 nm, aufweist. Insbesondere weist zumindest eine metallische Schicht der zumindest einen metallischen Schicht eine Dicke im Bereich von 8 nm bis 60 nm, bevorzugt von 10 nm bis 30 nm, auf. Durch diese Schichtdicke wird garantiert, dass für zumindest eine metallische Schicht der zumindest einen metallischen Schicht eine hohe Durchlässigkeit für UV-Strahlung erreicht wird. Dies ist insbesondere bei Verwendung eines Kaltklebers und/oder eines mittels elektromagnetischer Strahlung härtbaren Kleber, besonders bevorzugt eines mittels UV-Strahlung härtbaren Klebers, von Interesse, da somit garantiert werden kann, dass die UV-Strahlung einer UV-Strahlung emittierenden Lichtquelle insbesondere zumindest eine metallische Schicht der zumindest einen metallischen Schicht durchdringt und somit der darunter befindliche UV-Kleber härtbar ist. Gleichzeitig wird eine gute Sichtbarkeit und dekorative Wirkung zumindest einer metallischen Schicht der zumindest einen metallischen Schicht erreicht.

Es ist insbesondere möglich, dass zumindest eine Dekorschicht 45 der zumindest einen Dekorschicht 45 zumindest eine einen optisch variablen Effekt generierende Schicht aufweist. Dadurch lassen sich besonders hochwertige optische Eigenschaften der Dekorfolie 40 erzielen. Ferner ist es möglich, dass es sich hierbei um Sicherheitselemente handelt, die vorzugsweise fälschungssicher sind.

Ferner ist es bevorzugt, dass zumindest eine Dekorschicht 45 der zumindest einen Dekorschicht 45 zumindest eine Replizierlackschicht mit einer in zumindest eine Replizierlackschicht der zumindest einen Replizierlackschicht abgeformten Oberflächenstruktur aufweist, insbesondere ausgewählt aus: diffraktive Oberflächenstruktur, refraktive Oberflächenstruktur, Linsenstruktur, Mattstruktur und/oder Blaze-Gitter.

Insbesondere ist es vorteilhaft, wenn zumindest eine Dekorschicht 45 der zumindest einen Dekorschicht 45 zumindest eine Reflexionsschicht aufweist, insbesondere zumindest eine musterförmig in Form einer ersten Information ausgeformte Reflexionsschicht aufweist.

Es ist weiter bevorzugt vorgesehen, dass zumindest eine Dekorschicht 45 der zumindest einen Dekorschicht 45 zumindest eine musterförmig in Form einer zweiten Information ausgeformte Farbschicht aufweist.

Es ist insbesondere möglich, dass zumindest eine Dekorschicht 45 der zumindest einen Dekorschicht 45 zumindest ein Dünnfilmschichtelement zur Generierung eines blickwinkelabhängigen Farbverschiebungseffekts aufweist.

Weiter ist insbesondere vorgesehen, dass zumindest eine Grundierungsschicht 46 der zumindest einen Grundierungsschicht 46 eine Dicke im Bereich von 0,1 µm bis 2 µm, insbesondere bevorzugt von 0,2 µm bis 0,8 µm, aufweist.

Es ist bevorzugt möglich, dass zumindest eine Grundierungsschicht 46 der zumindest einen Grundierungsschicht 46 transparent und/oder transluzent und/oder opak und/oder eingefärbt und/oder zumindest teilweise eingefärbt und/oder glasklar ausgebildet ist. Insbesondere, wenn zumindest eine Grundierungsschicht 46 der zumindest einen Grundierungsschicht 46 zumindest teilweise eingefärbt und/oder eingefärbt ist, ergibt sich der Vorteil, dass der Kontrast zum Zielsubstrat 10 verstärkt wird und dies einen besonders hochwertigen optischen Eindruck bzw. Effekt bewirkt.

Es ist bevorzugt, dass zumindest eine Grundierungsschicht 46 der zumindest einen Grundierungsschicht 46 eine Oberflächenrauhigkeit im Bereich von 100 nm bis 200 nm, bevorzugt von 120 nm bis 160 nm, aufweist.

Zudem ist es beispielsweise möglich, dass die Gesamtlackschicht 41 mehrere Grundierungsschichten 46 umfasst, die in ihren chemischen und/oder physikalischen Eigenschaften unterschiedlich sind, sodass zu den angrenzenden Schichten die optimale Haftung ausgebildet wird. So ist es beispielsweise möglich, auf der einen Seite eine optimale Haftung in Richtung zumindest einer Dekorschicht 45 der zumindest einen Dekorschicht 45 und auf der anderen Seite eine optimale Haftung in Richtung zumindest einer Kleberschicht 47 der zumindest einen Kleberschicht 47 zu erzielen.

In Fig. 2 ist die Dekorfolie 40 mit demselben Aufbau, wie in Fig. 1 gezeigt, dargestellt, bis auf, dass eine Kleberschicht 47 eine Oberfläche der Gesamtlackschicht 41 in den ersten Bereichen 21 überdeckt und in den zweiten Bereichen 22 nicht überdeckt.

Es ist insbesondere vorgesehen, dass zumindest eine Kleberschicht 47 der zumindest einen Kleberschicht 47 zumindest einen ersten Bereich 21 der Gesamtlackschicht 41 zumindest teilweise oder vollflächig überdeckt.

Es ist ferner auch vorgesehen, dass zumindest eine Kleberschicht 47 der zumindest einen Kleberschicht 47 zumindest einen zweiten Bereich 22 der Gesamtlackschicht 41 nicht bedeckt, insbesondere wobei zumindest ein zweiter Bereich 22 des zumindest einen zweiten Bereich 22 zumindest einen ersten Bereich 21 des zumindest einen ersten Bereich 21 nicht oder zumindest teilweise oder vollflächig überlappt.

Insbesondere ist es möglich, dass zumindest ein erster Bereich 21 des zumindest einen ersten Bereichs 21 und/oder zumindest ein zweiter Bereich 22 des zumindest einen zweiten Bereichs 22 zumindest eines der folgenden Designelemente oder eine Kombination der folgenden Designelemente umfasst: Alphanumerisches Zeichen, Schriftzeichen, Symbol, Mikroschrift, Bild, Foto, Logo, Portrait, Piktogramm, Muster, insbesondere Endlosmuster, Raster, insbesondere periodisches Raster, amplitudenmoduliertes Raster, Punktraster, Linienraster, Motiv. Damit lassen sich individuelle Gestaltungsmöglichkeiten realisieren, die einen besonders hochwertigen Eindruck beim Betrachter hervorrufen.

Weiter ist es bevorzugt möglich, dass zumindest eine Kleberschicht 47 der zumindest einen Kleberschicht 47 aus einem Heißkleber und/oder einem thermoplastischen Kleber und/oder einem Kaltkleber und/oder einem strahlungshärtbaren Kleber, insbesondere einem mittels elektromagnetischer Strahlung und/oder Elektronenstrahlung und/oder mittels UV-Strahlung härtbaren Kleber, und/oder einem oxidativ härtenden Kleber und/oder einem migrationsarmen Kleber gebildet ist. Hierdurch kann die Dekorfolie 40 beispielsweise beim Einsatz eines Kaltkleber und/oder eines mittels UV-Strahlung härtbaren Kleber mittels Kaltprägens auf das Zielsubstrat 10 aufgebracht werden oder beispielsweise beim Einsatz eines thermoplastischen Klebers mittels Heißprägens auf das Zielsubtrat aufgebracht werden, indem die zumindest eine Kleberschicht 47 der zumindest einen Kleberschicht 47, die einen thermoplastischen Kleber umfasst, mittels eines beheizten Andrückstempels und/oder einer Andrückwalze aktiviert wird.

In Fig. 3 ist eine Schnittdarstellung des Zielsubstrats 10 dargestellt, wobei eine Oberfläche des Zielsubstrats 10 mit zumindest einer Kleberschicht 47 in den dritten Bereichen 23 überdeckt und in den vierten Bereichen 24 nicht überdeckt ist. Es ist insbesondere vorgesehen, dass zumindest eine Kleberschicht 47 der zumindest einen Kleberschicht 47 vor dem Aufbringen der Dekorfolie 40 auf das Zielsubstrat 10 in zumindest einem dritten Bereich 23 des zumindest einen dritten Bereichs 23 aufgetragen und in einem vierten Bereich 24 des zumindest einen vierten Bereichs 24 nicht aufgetragen wird.

Es ist auch möglich, dass zumindest eine Kleberschicht 47 der zumindest einen Kleberschicht 47 zumindest eine Oberfläche des Zielsubstrats 10 vollflächig überdeckt.

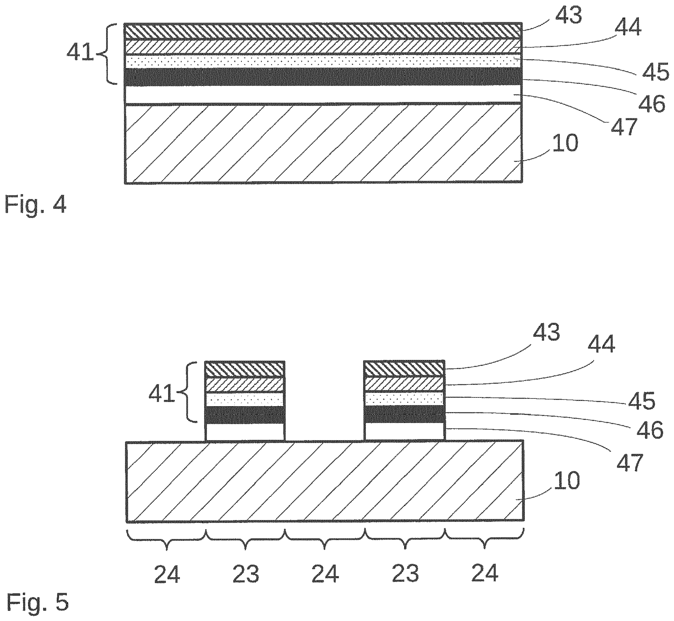

Für diese Ausführungsvariante ist ein dekoriertes Zielsubstrat in Fig. 4 in seiner Schnittdarstellung dargestellt. Insbesondere ist auf einem Zielsubstrat 10 zumindest eine Kleberschicht 47 der zumindest einen Kleberschicht 47 derart angeordnet, dass diese eine Oberfläche des Zielsubstrats 10 vollflächig überdeckt. Weiter umfasst das dekorierte Zielsubstrat eine Gesamtlackschicht 41 der Dekorfolie 40, wobei der Träger 42 bereits von der Dekorfolie 40 abgezogen worden ist. Bevorzugt kann auch vorgesehen sein, dass der Träger 42 auf der Dekorfolie 40 verbleibt.

In der gezeigten Ausführungsform wird die Ablöseschicht 43 mit auf das Zielsubstrat 10 übertragen und verbleibt nicht oder nur teilweise auf der Trägerfolie 42. Es ist in einer nicht näher dargestellten alternativen Ausführung auch möglich, dass die Ablöseschicht 43 auf der abgezogenen Trägerfolie 42 verbleibt bzw. nur sehr wenige Bereiche der Ablöseschicht 43 mit auf das Zielsubstrat 10 übertragen werden.

In Fig. 5 ist eine weitere Alternative für ein dekoriertes Zielsubstrat in der Schnittdarstellung gezeigt. Hierbei ist zumindest ein dritter Bereich 23 des zumindest einen dritten Bereichs 23 von der Gesamtlackschicht 41 dekoriert und zumindest ein vierter Bereich 24 des zumindest einen vierten Bereichs 24 nicht von der Gesamtlackschicht 41 dekoriert.

Es ist jedoch auch möglich, dass zumindest ein erster und/oder dritter Bereich 21, 23 des zumindest einen ersten und/oder dritten Bereichs 21, 23 von der Gesamtlackschicht 41 dekoriert wird und/oder zumindest ein zweiter und/oder vierter Bereich 22, 24 des zumindest einen zweiten und/oder vierten Bereichs 22, 24 nicht von der Gesamtlackschicht 41 dekoriert wird.

Es ist insbesondere vorgesehen, dass die Gesamtlackschicht 41 auf zumindest einer Oberfläche zumindest eine Farbschicht aufweist, wobei die Haftkraft zwischen zumindest einer Farbschicht der zumindest einen Farbschicht und der Gesamtlackschicht 41 mindestens 25 cN, bevorzugt mindestens 30 cN, beträgt.

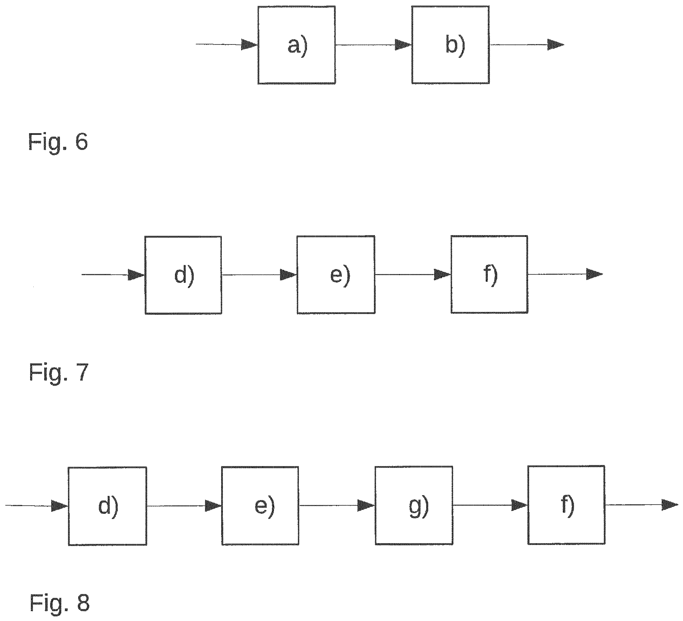

In Fig. 6 ist eine schematische Darstellung eines Verfahrens zur Herstellung einer Dekorfolie 40 gezeigt, wobei das Verfahren folgende Schritte, welche insbesondere in der folgenden Reihenfolge ausgeführt werden, umfasst:
a) Bereitstellen einer Trägerfolie 42, wobei die Trägerfolie 42 eine Dicke im Bereich von 3,0 µm bis 10,0 µm aufweist,
b) Aufbringen einer Gesamtlackschicht 41 auf zumindest einen Bereich zumindest einer Oberfläche der Trägerfolie 42, wobei eine Dekorfolie 40 ausgebildet wird.

Bevorzugt ist es möglich, dass die Gesamtlackschicht 41 im Schritt b) eine Dicke im Bereich von 1,0 µm bis 2,5 µm, bevorzugt von 1,0 µm bis 1,7 µm, aufweist.

Insbesondere ist hierbei vorgesehen, dass das Verhältnis der Trägerfoliendicke zu Gesamtlackschichtdicke in einem Bereich von 1,8:1 bis 7,0:1, bevorzugt von 2,5:1 bis 5,8:1, liegt, wobei die Trägerfolie 42 eine Dicke in einem Bereich von größer oder gleich 3 µm bis kleiner oder gleich 7 µm aufweist und/oder dass das Verhältnis der Trägerfoliendicke zu Gesamtlackschichtdicke in einem Bereich von 4,1:1 bis 10,0:1, bevorzugt von 4,4:1 bis 8,3:1, wobei die Trägerfolie 42 eine Dicke in einem Bereich von größer oder gleich 7 µm bis kleiner oder gleich 10 µm aufweist.

Weiter ist bevorzugt vorgesehen, dass die Gesamtlackschicht im Schritt b) zumindest eine Ablöseschicht 43 und/oder zumindest eine Schutzlackschicht 44 und/oder zumindest eine Dekorschicht 45 und/oder zumindest eine Grundierungsschicht 46 und/oder zumindest eine Kleberschicht 47 und/oder zumindest eine Farbschicht aufweist.

Es ist insbesondere auch möglich, dass zumindest eine Ablöseschicht 43 der zumindest einen Ablöseschicht 43 und/oder zumindest eine Schutzlackschicht 44 der zumindest einen Schutzlackschicht 44 und/oder zumindest eine Dekorschicht 45 der zumindest einen Dekorschicht 45 und/oder zumindest eine Grundierungsschicht 46 der zumindest einen Grundierungsschicht und/oder zumindest eine Kleberschicht 47 der zumindest einen Kleberschicht 47 und/oder zumindest eine Farbschicht der zumindest einen Farbschicht mittels Tiefdruck und/oder Siebdruck und/oder Hochdruck und/oder Tampondruck und/oder Inkjetdruck und/oder Offsetdruck und/oder Flexodruck und/oder Gusstechniken aufgebracht wird.

Es ist insbesondere vorgesehen, dass im Schritt b) die zumindest eine Kleberschicht 47 als ein Heißkleber, ein thermoplastischer Kleber, ein Kaltkleber, ein strahlungshärtbarer Kleber, insbesondere ein mittels elektromagnetischer Strahlung und/oder Elektronenstrahlung und/oder mittels UV-Strahlung härtbarer Kleber, oder ein oxidativ härtender Kleber und/oder ein migrationsarmer Kleber aufgebracht wird. Es ist weiter auch möglich, dass die Kleberschicht 47 auf eine Oberfläche der Gesamtlackschicht 41 zumindest teilweise aufgebracht wird.

Es ist insbesondere auch möglich, dass der Schritt b) weiter folgenden Schritt umfasst und/oder nach dem Schritt b) weiter folgender Schritt durchgeführt wird:
c) Aufbringen zumindest einer Kleberschicht 47 der zumindest einen Kleberschicht 47 derart, dass zumindest eine Kleberschicht 47 der zumindest einen Kleberschicht 47 zumindest einen ersten Bereich 21 der Gesamtlackschicht 41 zumindest teilweise oder vollflächig überdeckt und/oder einen zweiten Bereich 22 der Gesamtlackschicht 41 nicht überdeckt, insbesondere wobei zumindest ein zweiter Bereich 22 des zumindest einen zweiten Bereichs 22 zumindest einen ersten Bereich 21 des zumindest einen ersten Bereich 21 nicht oder zumindest teilweise oder vollflächig überlappt.

Insbesondere ist es auch möglich, dass zumindest ein erster Bereich 21 des zumindest einen ersten Bereichs 21 und/oder zumindest ein zweiter 22 Bereich des zumindest einen zweiten Bereichs 22 zumindest eines der folgenden Designelemente oder eine Kombination der folgenden Designelemente umfasst: Alphanumerisches Zeichen, Schriftzeichen, Symbol, Mikroschrift, Bild, Foto, Logo, Portrait, Piktogramm, Muster, insbesondere Endlosmuster, Raster, insbesondere periodisches Raster, amplitudenmoduliertes Raster, Punktraster, Linienraster, Motiv.

In Fig. 7 ist ein Verfahren zur Dekoration eines Zielsubstrats 10 schematisch dargestellt, wobei das Verfahren folgende Schritte, welche insbesondere in der folgenden Reihenfolge ausgeführt werden, umfasst:
d) Bereitstellen einer Dekorfolie 40
e) Bereitstellen eines Zielsubstrats 10
f) Aufbringen der Dekorfolie 40 auf das Zielsubstrat 10.

Wie in Fig. 8 schematisch dargestellt, ist es insbesondere auch vorgesehen, dass vor dem Schritt f) folgender Schritt ausgeführt wird:
g) Aufbringen zumindest einer Kleberschicht 47 auf die Dekorfolie 40 derart, dass zumindest eine Kleberschicht 47 der zumindest einen Kleberschicht 47 zumindest einen ersten Bereich 21 der Gesamtlackschicht 41 zumindest teilweise oder vollflächig überdeckt und/oder zumindest einen zweiten Bereich 22 der Gesamtlackschicht 41 nicht überdeckt, insbesondere wobei zumindest ein zweiter Bereich 22 des zumindest einen zweiten Bereich 22 zumindest einen ersten Bereich 21 des zumindest einen ersten Bereich 21 nicht oder zumindest teilweise oder vollflächig überlappt, und/oder Aufbringen zumindest einer Kleberschicht 47 auf das Zielsubstrat 10 derart, dass zumindest eine Kleberschicht 47 der zumindest einen Kleberschicht 47 zumindest einen dritten Bereich 23 des Zielsubstrats 10 zumindest teilweise oder vollflächig überdeckt und/oder zumindest einen vierten Bereich 24 des Zielsubstrats 10 nicht überdeckt, insbesondere wobei zumindest ein vierter Bereich 24 des zumindest einen vierten Bereich 24 zumindest einen dritten Bereich 23 des zumindest einen dritten Bereich 23 nicht oder zumindest teilweise oder vollflächig überlappt.

Es ist ferner auch vorgesehen, dass zumindest ein erster und/oder dritter Bereich 21, 23 des zumindest einen ersten und/oder dritten Bereichs 21, 23 und/oder zumindest ein zweiter und/oder vierter Bereich 22, 24 des zumindest einen zweiten und/oder vierten Bereichs 22, 24 zumindest eines der folgenden Designelemente oder eine Kombination der folgenden Designelemente umfasst: Alphanumerisches Zeichen, Schriftzeichen, Symbol, Mikroschrift, Bild, Foto, Logo, Portrait, Piktogramm, Muster, insbesondere Endlosmuster, Raster, insbesondere periodisches Raster, amplitudenmoduliertes Raster, Punktraster, Linienraster, Motiv.

Bevorzugt ist zumindest eine Kleberschicht 47 der zumindest einen Kleberschicht 47 in Schritt g) aus einem Heißkleber, einem thermoplastischen Kleber, einem Kaltkleber, einem strahlungshärtbaren Kleber, insbesondere einem mittels elektromagnetischer Strahlung und/oder Elektronenstrahlung und/oder mittels UV-Strahlung härtbaren Kleber, und/oder einem oxidativ härtenden Kleber und/oder einem migrationsarmen Kleber gebildet.

Es ist insbesondere weiter vorgesehen, dass im Schritt g) zumindest eine Kleberschicht 47 der zumindest einen Kleberschicht 47 mittels Tiefdruck und/oder Siebdruck und/oder Hochdruck und/oder Tampondruck und/oder Inkjetdruck und/oder Offsetdruck und/oder Flexodruck und/oder Gusstechniken aufgebracht wird.

Es ist auch möglich, dass zumindest ein erster und/oder dritter Bereich 21, 23 des zumindest einen ersten und/oder dritten Bereichs 21, 23, welcher zumindest teilweise oder vollflächig von der zumindest einen Kleberschicht 47 der zumindest einen Kleberschicht 47 überdeckt ist, von der Gesamtlackschicht 41 dekoriert wird.

Ferner ist es vorteilhaft, wenn auf zumindest eine Oberfläche der Gesamtlackschicht 41 nach dem Schritt f) zumindest eine Farbschicht aufgebracht wird, sodass die Haftkraft zwischen zumindest einer Farbschicht der zumindest einen Farbschicht und der Gesamtlackschicht 41 mindestens 25 cN, bevorzugt von mindestens 30 cN, beträgt.

Es ist auch vorteilhaft, wenn die Gesamtlackschicht 41 nach dem Schritt f) eine Deckkraft bei Dekoration einer zusammenhängenden Vollfläche von größer oder gleich 99,5%, bevorzugt von 100%, und eine Dekoration bzw. Point Perception bei Dekoration eines 10%-Rastertonfeldes von größer oder gleich 99,5%, bevorzugt von 100%, aufweist.

Es ist auch bevorzugt denkbar, dass im Schritt f) und/oder nach dem Schritt f) weiter folgender Schritt durchgeführt wird:
h) Andrücken der Dekorfolie 40 mit zumindest einen Andrückstempel und/oder zumindest einer Andrückwalze.

Weiter ist es bevorzugt auch möglich, dass zumindest ein Andrückstempel der zumindest einen Andrückstempel und/oder zumindest eine Andrückwalze der zumindest einen Andrückwalze im Schritt h) als ein beheizter Flächen- und/oder Formstempel ausgestaltet ist und/oder eine beheizte Walze ausgestaltet ist, wobei diese/r zumindest eine Kleberschicht 47 der zumindest einen Kleberschicht 47 zumindest teilweise und/oder in zumindest einen ersten und/oder dritten Bereich 21, 23 des zumindest einen ersten und/oder dritten Bereichs 21, 23 aktiviert und die Dekorfolie 40 mit dem Zielsubstrat 10 verbindet.

Es ist insbesondere auch möglich, dass nach dem Schritt f) weiter folgender Schritt ausgeführt wird:
Abziehen der Trägerfolie 42 von der Gesamtlackschicht 41, wobei der Abziehwinkel zwischen der Trägerfolie 42 und Gesamtlackschicht 41 in einem Bereich von 0° bis 120°, vorzugsweise von 0° bis 90°, liegt.

Beim Abziehen der Trägerfolie 42 von der Gesamtlackschicht 41 ist es insbesondere vorgesehen, dass auf zumindest einen ersten und/oder dritten Bereich 21, 23 des zumindest einen und/oder dritten Bereichs 21, 23 zumindest eine Kleberschicht 47 der zumindest einen Kleberschicht 47 aufgebracht ist und eine Dekoration in diesem Bereich stattfindet. Damit eine Dekoration nur im genannten Bereich stattfindet, muss die sogenannte Anrisskraft überwunden werden. Die Anrisskraft ist dabei jene Kraft, die beim Übertrag auf eine zu dekorierende Fläche bzw. zu dekorierenden Bereich überwunden werden muss, damit es zu definierten lokalen Brüchen der Gesamtlackschicht 41 der Dekorfolie 40 kommt und eine kantenscharfe Dekoration der zu dekorierenden Fläche bzw. zu dekorierenden Bereich ermöglicht.

Der äußere Rand, insbesondere der in Vorschubrichtung vordere Rand zumindest einer Kleberschicht 47 der zumindest einen Kleberschicht 47 wird als Anrisskante bezeichnet. Es ist insbesondere vorgesehen, dass die Gesamtlackschicht 41 exakt und definiert an dieser Anrisskante bricht, sodass zumindest eine Kleberschicht 47 der zumindest einen Kleberschicht 47, die in zumindest einen ersten und/oder dritten Bereich 21, 23 des zumindest einen ersten und/oder dritten Bereichs 21, 23 aufgebracht ist, die Dekoration vordefiniert.

Der in Vorschubrichtung äußere hintere Rand der Kleberschicht 47 wird als Abrisskante bezeichnet. Es ist insbesondere vorgesehen, dass die Gesamtlackschicht 41 exakt und definiert auch an dieser Abrisskante bricht, sodass zumindest eine Kleberschicht 47 der zumindest einen Kleberschicht 47, die in zumindest einen ersten und/oder dritten Bereich 21, 23 des zumindest einen ersten und/oder dritten Bereichs 21, 23 aufgebracht ist, die Dekoration vordefiniert.

Nachdem der Anriss der Gesamtlackschicht 41 vollzogen ist, erfolgt die Dekoration der zu dekorierenden Fläche bzw. des zu dekorierenden Bereichs durch Ablösung der Gesamtlackschicht 41 von der Trägerfolie 42. Die hierfür benötigte Kraft wird als Fortrisskraft bezeichnet und ist in der Regel kleiner als die Anrisskraft, da die Gesamtlackschicht 41 nicht durchbrochen werden muss. Generell gilt, dass eine geringe und homogene Fortrisskraft über den gesamten zu dekorierenden Bereich eine hohe Deckkraft gewährleistet, sowie die Anzahl von Dekorationsdefekten verringert wird.

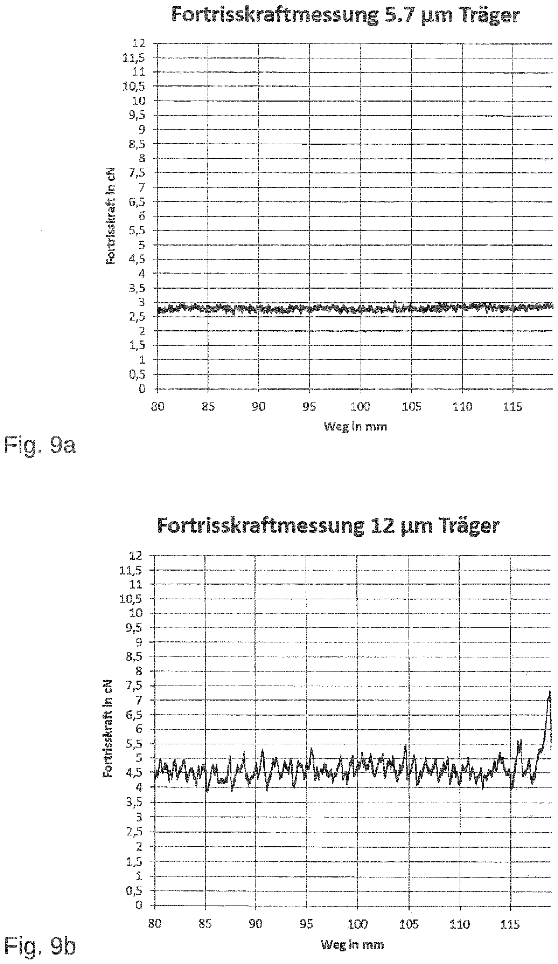

In den Fig. 9a und 9b sind beispielhaft die Kraftverläufe der Fortrisskraft für eine erfindungsgemäße Dekorfolie 40 mit einer Dicke der Trägerfolie 42 von 5,7 µm (Fig. 9a) und eine Dekorfolie 40 nach dem Stand der Technik (Fig. 9b) mit einer Dicke der Trägerfolie 42 von 12 µm gezeigt, wobei die Fortrisskraft in cN über dem Weg in mm angegeben ist. Die beiden getesteten Dekorfolien 40 weisen dabei den identischen Schichtaufbau und die identische Materialzusammensetzung auf, bis auf, dass die Trägerfoliendicken unterschiedlich sind.

Zur Erfassung der Messwerte wurde eine Materialprüfmaschine der Firma ZwickRoell GmbH & Co. KG des Typs Z005 verwendet. Die abzuziehende Trägerfolie 42 hat bei beiden Versuchen eine Breite von 13,5 mm und eine Länge von 41 mm. Die Ablösung der Trägerfolie 42 erfolgt in Längsrichtung mit einer Geschwindigkeit von 100 mm/min.

Der Mittelwert der Fortrisskraft für eine Dekorfolie 40 mit einer Trägerfoliendicke von 5,7 µm liegt in etwa bei 2,75 cN (siehe Fig. 9a), wohingegen der Mittelwert der Fortrisskraft für eine Dekorfolie 40 mit einer Trägerfoliendicke von 12 µm bei ca. 4,5 cN liegt (siehe Fig. 9b).

Die Schwankungen der Kraftamplitude, wobei hier insbesondere die Schwankung der Fortrisskraft um ihren Mittelwert verstanden wird, fallen für eine Dekorfolie 40 mit einer Trägerfoliendicke von 5,7 µm (Fig. 9a) geringer aus als für eine Dekorfolie 40 mit einer Trägerfoliendicke von 12 µm (Fig. 9b). Die Schwankungen der Kraftamplitude absolut betrachtet, liegen für eine Dekorfolie 40 mit einer Trägerfoliendicke von 5,7 µm bei weniger als ± 0,5 cN, wohingegen bei einer Dekorfolie 40 mit einer Trägerfoliendicke von 12 µm Schwankungen der Kraftamplitude um den Mittelwert von bis zu ±1 cN auftreten.

Insgesamt lässt sich also sagen, dass sowohl die absolute Fortrisskraft bei einer Dekorfolie 40 mit einer Trägerfoliendicke von 5,7 µm geringer als bei einer Dekorfolie 40 mit einer Trägerfoliendicke von 12 µm ist, als auch die Schwankungen der Kraftamplitude um ihren Mittelwert bei einer Dekorfolie 40 mit einer Trägerfoliendicke von 5,7 µm wesentlich geringer sind als bei einer Dekorfolie 40 mit einer Trägerfoliendicke von 12 µm. Mit einer Dekorfolie 40, deren Trägerfolie 42 eine Dicke im Bereich von 3 µm bis 10 µm aufweist, verhält sich die Fortrisskraft besonders homogen, wodurch eine verbesserte Dekoration und eine verbesserte Deckkraft resultieren.

Eine weitere Versuchsreihe belegt die oben dargelegten Vorteile. Zunächst werden mehrere gleichartige Zielsubstrate 10 vorbereitet, wobei auf die Zielsubstrate 10 eine Kleberschicht 47 in einem Rastertonfeld mit 10% Flächenbelegung aufgebracht wird, d.h. 10% der Fläche des Zielsubstrats 10 sind mit Kleberpunkten bedeckt. Das 10%-Rastertonfeld hat dabei eine Auflösung von 100 Ipi (lpi = "lines per inch"), ist amplitudenmoduliert und hat eine Winkelung der Rasterpunkte von 45°.

Zur Ermittlung der maximalen Kleberpunkte pro Zielsubstrat 10, wird ein Zielsubstrat 10 ohne Dekorfolie 40 mit einem Scanner mit einer Auflösung von 1200 dpi eingescannt und die Anzahl der Kleberpunkte ausgezählt. Das entstehende Bild wird auch als Kleberbild bezeichnet.

Dasselbe Vorgehen wird auch für dekorierte Zielsubstrate 10 durchgeführt, wobei zuvor ein Zielsubstrat 10 mit einer Dekorfolie 40 mit einer Trägerfoliendicke von 5,7 µm (A) und ein Zielsubstrat 10 mit einer Dekorfolie 40 mit einer Trägerfoliendicke von 12 µm (B) dekoriert wird und nach Aushärten der Kleberschicht 47 die Trägerfolie 42 von der Gesamtlackschicht 41 gelöst wird.

Ebenso wird dieser Prozess auch für mehrere Zielsubstrate 10 durchgeführt, bei denen die Kleberschicht 47 in einem Volltonfeld, also mit einer 100%-Flächenbelegung, aufgebracht wird.

Das Ergebnis dieser Versuchsreihe ist in nachfolgender Tabelle dargestellt:

| | 10% Raster (Anzahl dekorierter Punkte) | Relativer Anteil (von 8240 ermittelten Punkten aus Kleberbild) in % | Deckkraft des Volltonfelds in % |
|---|---|---|---|
| A (5,7 µm) | 8240 | 100 | 100 |
| B (12 µm) | 5116 | 62 | 99 |

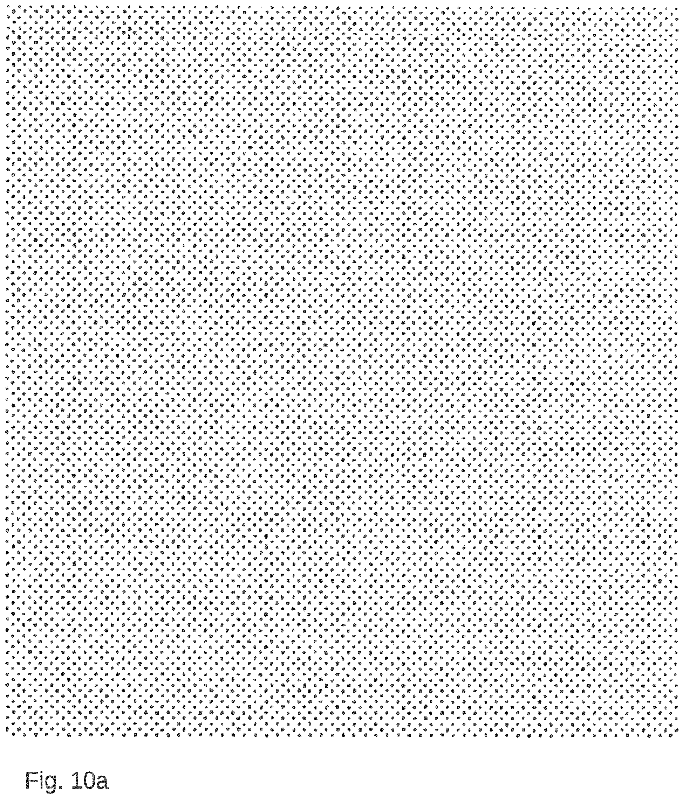

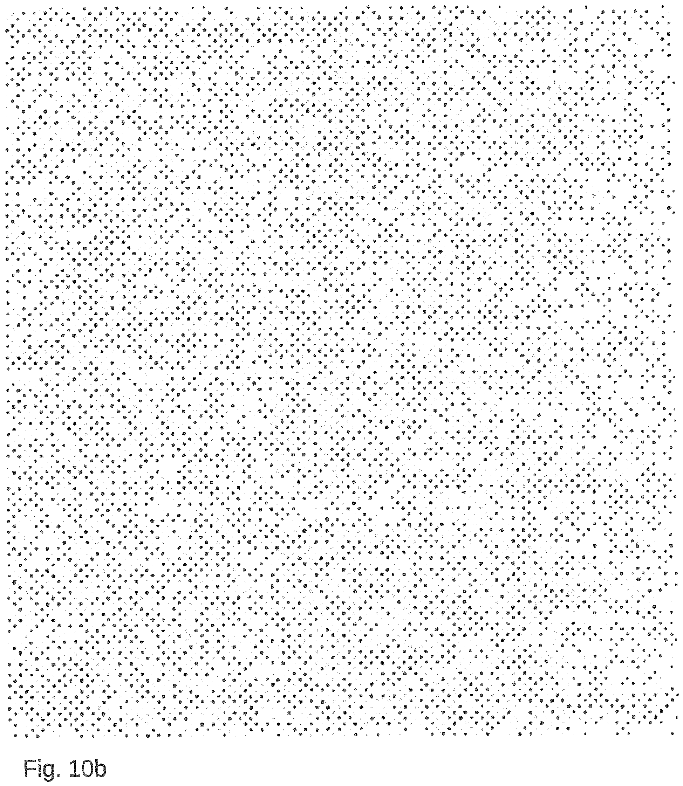

Im 10%-Raster werden durch eine Dekorfolie 40 mit einer Trägerfoliendicke von 5,7 µm alle 8240 Kleberpunkte dekoriert, dies ist auch in Fig. 10a dargestellt. Hingegen werden mit einer Dekorfolie 40 mit einer Trägerfoliendicke von 12 µm lediglich nur 62% der Kleberpunkte dekoriert, wie auch in Fig. 10b zu sehen. Demnach kann für eine Dekorfolie 40 mit einer Trägerfoliendicke von 5,7 µm von einer sauberen Ausprägung bzw. einer hohen Point Perception die Rede sein, dies da, 100% der Kleberpunkte dekoriert werden und somit die Gesamtlackschicht 41 optimal an der Anrisskante und/oder an der Abrisskante bricht.

Weiter wird mit einer Dekorfolie 40 mit einer Trägerfoliendicke von 5,7 µm eine Deckkraft des Volltonfeldes von 100% erzielt, wohingegen mit einer Dekorfolie 40 mit einer Trägerfoliendicke von 12 µm eine Deckkraft des Volltonfeldes von 99% erzielt wird.

Es ergeben sich daher für eine Dekorfolie 40 mit einer Trägerfoliendicke im Bereich von 3 µm bis 10 µm die Vorteile einer sauberen Ausprägung und einer sehr hohen Deckkraft.

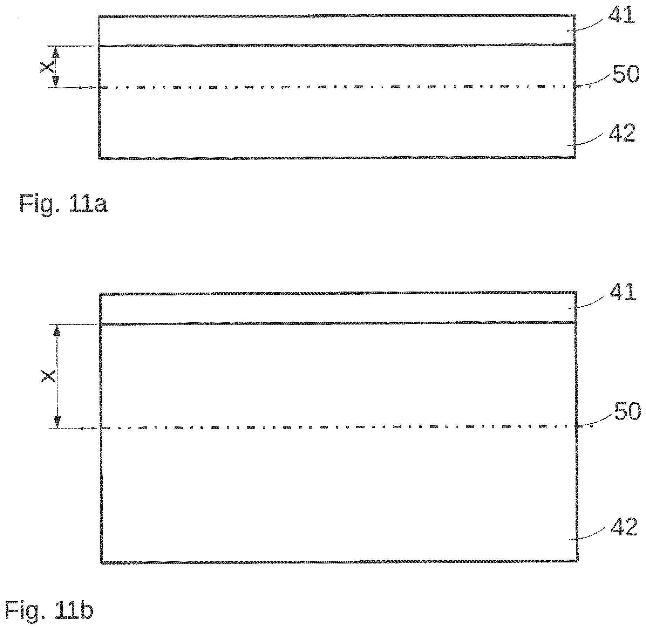

Erläuternd werden weiter die Figuren 11 a und 11b angeführt, worin jeweils eine neutrale Faser 50 für eine Dekorfolie 40 mit einer Trägerfoliendicke von 5,7 µm (Fig. 11a) und für eine Dekorfolie 40 mit einer Trägerfoliendicke von 12 µm (Fig. 11b) eingezeichnet ist. Die neutrale Faser 50 verläuft dabei entlang der geometrischen Mittelebene oder Mittellinie der Dekorfolie 40. Die neutrale Faser 50 ist jene Faser, deren Länge sich bei Verdrehen und/oder Biegen nicht ändert, d.h. auf die neutrale Faser 50 wirken keine Zug-Spannungen oder Druck-Spannungen. Weiter ist der Abstand x von der neutralen Faser zu der Gesamtlackschicht 41 dargestellt. Je geringer die Trägerfoliendicke der Dekorfolie 40, desto geringer ist der Abstand x. Mit geringer werdendem Abstand x, wird sodann auch die Normalspannung der Gesamtlackschicht 41 infolge Biegung reduziert. Die verringerte Normalspannung der Gesamtlackschicht 41 bei einer Dekorfolie 40 mit einer Trägerfoliendicke im Bereich von 3 µm bis 10 µm sorgt dafür, dass es nicht bereits vor dem Ablösen der Trägerfolie zu undefinierten und/oder zufälligen lokalen Brüchen in der Gesamtlackschicht 41 kommt. Damit kann eine saubere Ausprägung bzw. eine sehr hohe Point Perception erreicht werden.

Es ist insbesondere vorgesehen, dass die Fortrisskraft Schwankungen der Kraftamplitude um ihren Mittelwert in einem Bereich von größer oder gleich -0,5 cN bis kleiner oder gleich 0,5 cN aufweist.

Weiter ist es bevorzugt vorgesehen, dass die Gesamtlackschicht 41 eine Deckkraft bei Dekoration einer zusammenhängenden Vollfläche von größer oder gleich 99,5%, bevorzugt von 100%, und eine Dekoration bzw. Point Perception bei Dekoration eines 10%-Rastertonfeldes von größer oder gleich 99,5%, bevorzugt von 100%, aufweist.

Es ist insbesondere möglich, dass die Fortrisskraft der Gesamtlackschicht 41 von der Trägerfolie 42 in einem Bereich von 2 cN bis 8 cN liegt.

### Bezugszeichenliste

- 10: Zielsubstrat

- 21: Erster Bereich
- 22: Zweiter Bereich
- 23: Dritter Bereich
- 24: Vierter Bereich

- 40: Dekorfolie
- 41: Gesamtlackschicht
- 42: Trägerfolie
- 43: Ablöseschicht
- 44: Schutzlackschicht
- 45: Dekorschicht
- 46: Grundierungsschicht
- 47: Kleberschicht

- 50: Neutrale Faser

- x: Abstand

## Patentansprüche

1. Dekorfolie (40), insbesondere Laminierfolie, Kaltprägefolie oder Heißprägefolie, umfassend eine Trägerfolie (42) und eine Gesamtlackschicht (41),
**dadurch gekennzeichnet,**
**dass** die Trägerfolie (42) eine Dicke im Bereich von 3,0 µm bis 10,0 µm aufweist
und **dass** die Gesamtlackschicht (41) eine Dicke im Bereich von 1,0 µm bis 2,5 µm aufweist
und **dass** die Gesamtlackschicht (41) zumindest eine Dekorschicht aufweist
und **dass** zumindest eine Dekorschicht (45) der zumindest einen Dekorschicht (45) eine Dicke im Bereich von 8 nm bis 500 nm aufweist.

2. Dekorfolie nach dem vorhergehenden Anspruch,
**dadurch gekennzeichnet,**
**dass** die Gesamtlackschicht (41) eine Dicke im Bereich von 1,0 µm bis 1,7 µm aufweist
und/oder
**dass** das Verhältnis der Trägerfoliendicke zu Gesamtlackschichtdicke in einem Bereich von 1,8:1 bis 7,0:1, bevorzugt von 2,5:1 bis 5,8:1, liegt, wobei die Trägerfolie (42) eine Dicke in einem Bereich von größer oder gleich 3 µm bis kleiner oder gleich 7 µm aufweist und/oder dass das Verhältnis der Trägerfoliendicke zu Gesamtlackschichtdicke in einem Bereich von 4,1:1 bis 10,0:1, bevorzugt von 4,4:1 bis 8,3:1, liegt, wobei die Trägerfolie (42) eine Dicke in einem Bereich von größer oder gleich 7 µm bis kleiner oder gleich 10 µm aufweist.

3. Dekorfolie nach einem der vorhergehenden Ansprüche,
**dadurch gekennzeichnet,**
**dass** die Dekorfolie (40) für UV-Strahlung im Wellenlängenbereich von 250 nm bis 400 nm eine Durchlässigkeit im Bereich von 5% bis 70%, insbesondere von 10% bis 40%, aufweist.

4. Dekorfolie nach einem der vorhergehenden Ansprüche,
**dadurch gekennzeichnet,**
**dass** die Fortrisskraft Schwankungen der Kraftamplitude um ihren Mittelwert in einem Bereich von größer oder gleich -0,5 cN bis kleiner oder gleich 0,5 cN aufweist
und/oder
**dass** die Gesamtlackschicht (41) auf zumindest einer Oberfläche zumindest eine Farbschicht aufweist, wobei die Haftkraft zwischen zumindest einer Farbschicht der zumindest einen Farbschicht und der Gesamtlackschicht (41) mindestens 25 cN, bevorzugt mindestens 30 cN, beträgt.

5. Dekorfolie nach einem der vorhergehenden Ansprüche,
**dadurch gekennzeichnet,**
**dass** die Gesamtlackschicht (41) eine Deckkraft bei Dekoration einer zusammenhängenden Vollfläche von größer oder gleich 99,5%, bevorzugt von 100%, und eine Dekoration bzw. Point Perception bei Dekoration eines 10%-Rastertonfeldes von größer oder gleich 99,5%, bevorzugt von 100%, aufweist.

6. Dekorfolie nach einem der vorhergehenden Ansprüche,
**dadurch gekennzeichnet,**
**dass** die Gesamtlackschicht (41) zumindest eine Ablöseschicht (43) und/oder zumindest eine Schutzlackschicht (44) und/oder zumindest eine Grundierungsschicht (46) und/oder zumindest eine Kleberschicht (47) und/oder zumindest eine Farbschicht aufweist.

7. Dekorfolie nach Anspruch 6,
**dadurch gekennzeichnet,**
**dass** zumindest eine Ablöseschicht (43) der zumindest einen Ablöseschicht (43) ein Material oder eine Materialkombination umfasst, ausgewählt aus:
Wachse, Silikone, Polyurethane und/oder Polymere, bevorzugt Acrylat-Copolymer, Polyester-Copolymere, Polystyrol-Copolymere, Polycarbonat-Copolymere;
und/oder
**dass** zumindest eine Ablöseschicht (43) der zumindest einen Ablöseschicht (43) eine Dicke im Bereich von 0,01 µm bis 0,50 µm, bevorzugt von 0,10 µm bis 0,30 µm, aufweist
und/oder
**dass** zumindest eine Ablöseschicht (43) der zumindest einen Ablöseschicht (43) transparent und/oder transluzent und/oder opak und/oder eingefärbt und/oder zumindest teilweise eingefärbt und/oder glasklar ausgebildet ist.

8. Dekorfolie nach Anspruch 6 oder 7,
**dadurch gekennzeichnet,**
**dass** zumindest eine Schutzlackschicht (44) der zumindest einen Schutzlackschicht (44) ein Material oder eine Materialkombination umfasst, ausgewählt aus: Polymere, insbesondere Acrylat-Copolymere, Polyester-Copolymere, Polystyrol-Copolymere, Polycarbonat-Copolymere und/oder SMA-Copolymere.

9. Dekorfolie nach Anspruch 7 oder 8,
**dadurch gekennzeichnet,**
**dass** die Polymere, insbesondere Acrylat-Copolymere, Polyester-Copolymere, Polystyrol-Copolymere, Polycarbonat-Copolymere und/oder SMA-Copolymere oder Kombinationen daraus, der Gesamtlackschicht (41) eine molare Masse im Bereich von 1000 g/mol bis 100000 g/mol, bevorzugt von 3000 g/mol bis 35000 g/mol, aufweisen.

10. Dekorfolie nach einem der Ansprüche 6 bis 9,
**dadurch gekennzeichnet,**
**dass** zumindest eine Schutzlackschicht (44) der zumindest einen Schutzlackschicht (44) eine Dicke im Bereich von 0,5 µm bis 3 µm, insbesondere von 0,8 µm bis 1,3 µm, aufweist
und/oder
**dass** zumindest eine Schutzlackschicht (44) der zumindest einen Schutzlackschicht (44) transparent und/oder transluzent und/oder opak und/oder eingefärbt und/oder zumindest teilweise eingefärbt und/oder glasklar ausgebildet ist.

11. Dekorfolie nach einem der vorhergehenden Ansprüche,
**dadurch gekennzeichnet,**
**dass** die Fortrisskraft der Gesamtlackschicht (41) von der Trägerfolie (42) in einem Bereich von 2 cN bis 8 cN liegt.

12. Dekorfolie nach einem der Ansprüche 6 bis 11,
**dadurch gekennzeichnet,**
**dass** zumindest eine Dekorschicht (45) der zumindest einen Dekorschicht (45) zumindest eine einen optisch variablen Effekt generierende Schicht aufweist
und/oder
**dass** zumindest eine Dekorschicht (45) der zumindest einen Dekorschicht (45) zumindest eine Replizierlackschicht mit einer in zumindest eine Replizierlackschicht der zumindest einen Replizierlackschicht abgeformten Oberflächenstruktur aufweist, insbesondere ausgewählt aus: diffraktive Oberflächenstruktur, refraktive Oberflächenstruktur, Linsenstruktur, Mattstruktur und/oder Blaze-Gitter;
und/oder
**dass** zumindest eine Dekorschicht (45) der zumindest einen Dekorschicht (45) zumindest eine Reflexionsschicht aufweist, insbesondere zumindest eine musterförmig in Form einer ersten Information ausgeformte Reflexionsschicht aufweist.

13. Dekorfolie nach einem der Ansprüche 6 bis 12,
**dadurch gekennzeichnet,**
**dass** zumindest eine Dekorschicht (45) der zumindest einen Dekorschicht (45) zumindest ein Dünnfilmschichtelement zur Generierung eines blickwinkelabhängigen Farbverschiebungseffekts aufweist
und/oder
**dass** zumindest eine Dekorschicht (45) der zumindest einen Dekorschicht (45) zumindest eine musterförmig in Form einer zweiten Information ausgeformte Farbschicht aufweist
und/oder
**dass** zumindest eine Dekorschicht (45) der zumindest einen Dekorschicht (45) zumindest eine metallische Schicht und/oder zumindest eine dielektrische Schicht umfasst
und/oder
**dass** zumindest eine Dekorschicht (45) der zumindest einen Dekorschicht (45) eine Dicke im Bereich von 8 nm bis 60 nm, insbesondere von 10 nm bis 30 nm, aufweist.

14. Dekorfolie nach Anspruch 13,
**dadurch gekennzeichnet,**
**dass** zumindest eine metallische Schicht der zumindest einen metallischen Schicht ein Material oder eine Materialkombination umfasst, ausgewählt aus: Aluminium, Silber, Gold, Kupfer, Nickel, Chrom und/oder einer Legierung umfassend mindestens zwei dieser Metalle;
und/oder
**dass** zumindest eine dielektrische Schicht der zumindest einen dielektrischen Schicht ein Material oder eine Materialkombination umfasst, ausgewählt aus: Metalloxid, Polymer, Lack und/oder HRI-Material, insbesondere MgO, TiOₙ, Al₂O₃, ZnO, ZnS und/oder SiOₙ, wobei die Variable n vorzugsweise im Bereich von größer oder gleich 0 bis kleiner oder gleich 3 liegt.

15. Dekorfolie nach einem der Ansprüche 6 bis 14,
**dadurch gekennzeichnet,**
**dass** zumindest eine Grundierungsschicht (46) der zumindest einen Grundierungsschicht (46) eine Dicke im Bereich von 0,1 µm bis 2 µm, insbesondere bevorzugt von 0,2 µm bis 0,8 µm, aufweist
und/oder
**dass** zumindest eine Grundierungsschicht (46) der zumindest einen Grundierungsschicht (46) transparent und/oder transluzent und/oder opak und/oder eingefärbt und/oder zumindest teilweise eingefärbt und/oder glasklar ausgebildet ist.

16. Verfahren zur Herstellung einer Dekorfolie, insbesondere nach einem der Ansprüche 1 bis 15, wobei das Verfahren folgende Schritte, welche insbesondere in der folgenden Reihenfolge ausgeführt werden, umfasst:
a) Bereitstellen einer Trägerfolie (42), wobei die Trägerfolie (42) eine Dicke im Bereich von 3,0 µm bis 10,0 µm aufweist,
b) Aufbringen einer Gesamtlackschicht (41) auf zumindest einen Bereich zumindest einer Oberfläche der Trägerfolie (42), wobei eine Dekorfolie (40) ausgebildet wird,
und dass die Gesamtlackschicht (41) im Schritt b) eine Dicke im Bereich von 1,0 µm bis 2,5 µm aufweist
und dass die Gesamtlackschicht (41) im Schritt b) zumindest eine Dekorschicht aufweist und dass zumindest eine Dekorschicht (45) der zumindest einen Dekorschicht (45) eine Dicke im Bereich von 8 nm bis 500 nm aufweist.

17. Verfahren nach Anspruch 16,
**dadurch gekennzeichnet,**
**dass** die Gesamtlackschicht (41) im Schritt b) eine Dicke im Bereich von 1,0 µm bis 1,7 µm aufweist
und/oder
**dass** das Verhältnis der Dicke der Trägerfolie (42) zu der Dicke der Gesamtlackschicht (41) in einem Bereich von 1,8:1 bis 7,0:1, bevorzugt von 2,5:1 bis 5,8:1, liegt, wobei die Trägerfolie (42) eine Dicke in einem Bereich von größer oder gleich 3 µm bis kleiner oder gleich 7 µm aufweist und/oder dass das Verhältnis der Dicke der Trägerfolie (42) zu der Dicke der Gesamtlack in einem Bereich von 4,1:1 bis 10,0:1, bevorzugt von 4,4:1 bis 8,3:1, liegt, wobei die Trägerfolie (42) eine Dicke in einem Bereich von größer oder gleich 7 µm bis kleiner oder gleich 10 µm aufweist.

18. Verfahren nach Anspruch 16 oder 17,
**dadurch gekennzeichnet,**
**dass** die Gesamtlackschicht (41) im Schritt b) zumindest eine Ablöseschicht (43) und/oder zumindest eine Schutzlackschicht (44) und/oder zumindest eine Grundierungsschicht (46) und/oder zumindest eine Kleberschicht (47) und/oder zumindest eine Farbschicht aufweist.

19. Verfahren zur Dekoration eines Zielsubstrats, wobei das Verfahren folgende Schritte, welche insbesondere in der folgenden Reihenfolge ausgeführt werden, umfasst:
d) Bereitstellen einer Dekorfolie (40) gemäß einem der Ansprüche 1 bis 15,
e) Bereitstellen eines Zielsubstrats (10),
f) Aufbringen der Dekorfolie (40) auf das Zielsubstrat (10).

20. Verfahren nach Anspruch 19,
**dadurch gekennzeichnet,**
**dass** auf zumindest eine Oberfläche der Gesamtlackschicht (41) nach dem Schritt f) zumindest eine Farbschicht aufgebracht wird, sodass die Haftkraft zwischen zumindest einer Farbschicht der zumindest einen Farbschicht und der Gesamtlackschicht (41) mindestens 25 cN, bevorzugt von mindestens 30 cN, beträgt.

21. Verfahren nach Anspruch 19 oder 20,
**dadurch gekennzeichnet,**
**dass** die Gesamtlackschicht (41) nach dem Schritt f) eine Deckkraft bei Dekoration einer zusammenhängenden Vollfläche von größer oder gleich 99,5%, bevorzugt von 100%, und eine Dekoration bzw. Point Perception bei Dekoration eines 10%-Rastertonfeldes von größer oder gleich 99,5%, bevorzugt von 100%, aufweist.

## Claims

1. Decorative foil (40), in particular laminating foil, cold stamping foil, or thermographic foil, comprising a carrier film (42) and a total paint layer (41), **characterised in that**
the carrier film (42) has a thickness in the range from 3.0 µm to 10.0 µm
and the total paint layer (41) has a thickness in the range from 1.0 µm to 2.5 µm
and the total paint layer (41) has at least one decorative layer
and at least one decorative layer (45) of the at least one decorative layer (45) has a thickness in the range from 8 nm to 500 nm.

2. Decorative foil according to the preceding claim,
**characterised in that**
the total paint layer (41) has a thickness in the range from 1.0 µm to 1.7 µm
and/or
the ratio of the carrier film thickness to the total paint layer thickness is in the range from 1.8:1 to 7.0:1, preferably from 2.5:1 to 5.8:1, wherein the carrier film (42) has a thickness in a range from greater or equal to 3 µm to less than or equal to 7 µm and/or the ratio of the carrier film thickness to the total paint layer thickness is in a range from 4.1:1 to 10.0: 1, preferably from 4.4:1 to 8.3:1, wherein the carrier film (42) has a thickness in a range from greater than or equal to 7 µm to less than or equal to 10 µm.

3. Decorative foil according to one of the preceding claims,
**characterised in that**
the decorative foil (40) has a permeability in the range of 5% to 70%, in particular from 10% to 40% for UV radiation in the wavelength range from 250 nm to 400 nm.

4. Decorative foil according to one of the preceding claims,
**characterised in that**
the tearing force fluctuations in the force amplitude around its mean value is in a range from greater than or equal to -0.5 cN to less than or equal to -0.5 cN
and/or
the total paint layer (41) has at least one colour layer on at least one surface, wherein the adhesive strength is at least 25 cN, preferably at least 30 cN, between at least one colour layer of the at least one colour layer and the total paint layer (41).

5. Decorative foil according to one of the preceding claims,
**characterised in that**
the total paint layer (41) has coverage, with decoration of an associated full surface, of greater than or equal to 99.5%, preferably 100%, and a decoration or point perception with decoration of a 10% mid-tone field of greater than or equal to 99.5%, preferably 100%.

6. Decorative foil according to one of the preceding claims,
**characterised in that**
the total paint layer (41) has at least one release layer (43) and/or at least one protective paint layer (44) and/or at least one primer layer (46) and/or at least one adhesive layer (47) and/or at least one colour layer.

7. Decorative foil according to claim 6,
**characterised in that**
at least one release layer (43) of the at least one release layer (43) comprises a material or a material combination, selected from: waxes, silicones, polyurethanes and/or polymers, preferably acrylate-copolymers, polyester-copolymers, polystyrene-copolymers, polycarbonate-copolymers;
and/or
at least one release layer (43) of the at least one release layer (43) has a thickness in the range from 0.01 µm to 0.50 µm, preferably from 0.10 µm to 0.30 µm
and/or
at least one release layer (43) of the at least one release layer (43) is formed to be transparent and/or translucent and/or opaque and/or coloured in and/or at least partially coloured in and/or crystal clear.

8. Decorative foil according to claim 6 or 7,
**characterised in that** at least one protective paint layer (44) of the at least one protective paint layer (44) comprises a material or a material combination, selected from: polymers, in particular acrylate-copolymers, polyester-copolymers, polystyrene-copolymers, polycarbonate-copolymers and/or SMA-copolymers.

9. Decorative foil according to claim 7 or 8,
**characterised in that** the polymers, in particular acrylate-copolymers, polyester-copolymers, polystyrene-copolymers, polycarbonate-copolymers and/or SMA-copolymers, or a combination thereof, of the total paint layer (41) has a molar mass in the range from 1000 g/mol to 100000 g/mol, preferably from 3000 g/mol to 35000 g/mol.

10. Decorative foil according to one of claims 6 to 9,
**characterised in that** the at least one protective paint layer (44) of the at least one protective paint layer (44) has a thickness in the range from 0.5 µm to 3 µm, in particular from 0.8 µm to 1.3 µm
and/or
at least one protective paint layer (44) of the at least one protective paint layer (44) is formed to be transparent and/or translucent and/or opaque and/or coloured in and/or at least partially coloured in and/or crystal clear.

11. Decorative foil according to one of the preceding claims,
**characterised in that**
the tearing force of the total paint layer (41) of the carrier film (42) is in a range from 2 cN to 8 cN.

12. Decorative foil according to one of claims 6 to 11,
**characterised in that**
at least one decorative layer (45) of the at least one decorative layer (45) has at least one layer generating a visually variable effect
and/or
at least one decorative layer (45) of the at least one decorative layer (45) has at least one replicating paint layer having a surface structure moulded into at least one replicating paint layer of the at least one replicating paint layer, in particular selected from: diffractive surface structure, refractive surface structure, lens structure, matte structure and/or blazed grating;
and/or
at least one decorative layer (45) of the at least one decorative layer (45) has at least one reflective layer, in particular at least one reflective layer moulded in a pattern in the shape of a first piece of information.

13. Decorative foil according to one of claims 6 to 12,
**characterised in that**
at least one decorative layer (45) of the at least one decorative layer (45) has at least one thin film layer element for generating a viewing-angle-dependent colour shifting effect
and/or
at least one decorative layer (45) of the at least one decorative layer (45) has at least one colour layer moulded in a pattern in the shape of a second piece of information
and/or
at least one decorative layer (45) of the at least one decorative layer (45) comprises at least one metallic layer and/or at least one dielectric layer
and/or
at least one decorative layer (45) of the at least one decorative layer (45) has a thickness in the range from 8 nm to 60 nm, in particular from 10 nm to 30 nm.

14. Decorative foil according to claim 13,
**characterised in that**
at least one metallic layer of the at least one metallic layer comprises a material or a material combination, selected from: aluminium, silver, gold, copper, nickel, chromium and/or an alloy comprising at least two of these metals;
and/or
at least one dielectric layer of the at least one dielectric layer comprises a material or a material combination, selected from: metal oxide, polymer, paint and/or HRI material, in particular MgO, TiOₙ, Al₂O₃, ZnO, ZnS and/or SiOₙ, wherein the variable n is preferably in the range from greater than or equal to 0 to less than or equal to 3.

15. Decorative foil according to one of claims 6 to 14,
**characterised in that**
at least one primer layer (46) of the at least one the primer layer (46) has a thickness in the range from 0.1 µm to 2 µm, in particular preferably from 0.2 µm to 0.8 µm
and/or
at least one primer layer (46) of the at least one primer layer (46) is formed to be transparent and/or translucent and/or opaque and/or coloured in and/or at least partially coloured in and/or crystal clear.

16. Method for producing a decorative film, in particular according one of claims 1 to 15, wherein the method comprises the following steps, which in particular are performed in the following order:
a) providing a carrier film (42), wherein the carrier film (42) has a thickness in the range from 3.0 µm to 10.0 µm,
b) applying a total paint layer (41) onto at least one area of at least one surface of the carrier film (42), wherein a decorative foil (40) is formed,
and in step b) the total paint layer (41) has a thickness in the range from 1.0 µm to 2.5 µm
and in step b) the total paint layer (41) has at least one decorative layer and at least one decorative layer (45) of the at least one decorative layer (45) has a thickness in the range from 8 nm to 500 nm.

17. Method according to claim 16,
**characterised in that**
in step b) the total paint layer (41) has a thickness in the range from 1.0 µm to 1.7 µm and/or the ratio of the thickness of the carrier film (42) to the thickness of the total paint layer (41) is in a range from 1.8:1 to 7.0:1, preferably from 2.5:1 to 5.8:1, wherein the carrier film (42) has a thickness in a range from greater than or equal to 3 µm to less than or equal to 7 µm and/or the ratio of the thickness of the carrier film (42) to the thickness of the total paint is in a range from 4.1:1 to 10.0:1, preferably from 4.4:1 to 8.3:1, wherein the carrier film (42) has a thickness in a range from greater than or equal to 7 µm to less than or equal to 10 µm.

18. Method according to claim 16 or 17,
**characterised in that**
in step b) the total paint layer (41) has at least one release layer (43) and/or at least one protective paint layer (44) and/or at least one primer layer (46) and/or at least one adhesive layer (47) and/or at least one colour layer.

19. Method for decorating a target substrate, wherein the method comprises the following steps, which in particular are performed in the following order:
d) providing a decorative film (40) according to one of claims 1 to 15,
e) providing a target substrate (10),
f) applying the decorative foil (40) onto the target substrate (10).

20. Method according to claim 19,
**characterised in that**, after step f) on at least one surface of the total paint layer (41), at least one colour layer is applied, so that the adhesive strength is at least 25 cN, preferably at least 30 cN, between at least one colour layer of the at least one colour layer and the total paint layer (41).

21. Method according to claim 19 or 20,
**characterised in that**
after step f) the total paint layer (41) has a coverage with decoration of an associated full surface from greater than or equal to 99.5%, preferably from 100% and a decoration or point perception with decoration of a 10% mid-tone field from greater than or equal to 99.5%, preferably from 100%.

## Revendications

1. Film décoratif (40), en particulier film stratifié, film d'estampage à froid ou film d'estampage à chaud, comprenant un film de support (42) et une couche de vernis total (41),
**caractérisé**
**en ce que** le film de support (42) présente une épaisseur dans la plage de 3,0 µm à 10,0 µm
et **en ce que** la couche de vernis total (41) présente une épaisseur dans la plage de 1,0 µm à 2,5 µm
et **en ce que** la couche de vernis total (41) présente au moins une couche décorative
et **en ce qu'**au moins une couche décorative (45) de l'au moins une couche décorative (45) présente une épaisseur dans la plage de 8 nm à 500 nm.

2. Film décoratif selon la revendication précédente,
**caractérisé en ce que**
la couche de vernis total (41) présente une épaisseur dans la plage de 1,0 µm à 1,7 µm
et/ou
**en ce que** le rapport entre l'épaisseur de film de support et l'épaisseur de couche de vernis total se situe dans une plage de 1,8:1 à 7,0:1, de préférence de 2,5:1 à 5,8:1, dans lequel le film de support (42) présente une épaisseur dans une plage d'une valeur supérieure ou égale à 3 µm à une valeur inférieure ou égale à 7 µm et/ou **en ce que** le rapport entre l'épaisseur de film de support et l'épaisseur de couche de vernis total se situe dans une plage de 4,1:1 à 10,0:1, de préférence de 4,4:1 à 8,3:1, dans lequel le film de support (42) présente une épaisseur dans une plage d'une valeur supérieure ou égale à 7 µm à une valeur inférieure ou égale à 10 pm.

3. Film décoratif selon l'une quelconque des revendications précédentes,
**caractérisé en ce que**
le film de support (40) présente une transmissibilité dans la plage de 5 % à 70 %, en particulier de 10 % à 40 % pour un rayonnement ultraviolet dans la plage de longueurs d'onde de 250 nm à 400 nm.

4. Film décoratif selon l'une quelconque des revendications précédentes,
**caractérisé en ce que**
la force d'arrachement présente des variations de l'amplitude de force autour de sa valeur médiane dans une plage d'une valeur supérieure ou égale à -0,5 cN à une valeur inférieure ou égale à 0,5 cN
et/ou
**en ce que** la couche de vernis total (41) présente sur au moins une surface au moins une couche de couleur, dans lequel la force d'adhérence entre au moins une couche de couleur de l'au moins une couche de couleur et la couche de vernis total (41) s'élève au moins à 25 cN, de préférence au moins à 30 cN.

5. Film décoratif selon l'une quelconque des revendications précédentes,
**caractérisé en ce que**
la couche de vernis total (41) présente un pouvoir couvrant supérieur ou égal à 99,5 %, de préférence de 100 % pour une décoration d'une surface pleine continue, et une perception de décoration ou de point supérieure ou égale à 99,5 %, de préférence de 100 % pour une décoration d'une zone en demi-teinte à 10 %.

6. Film décoratif selon l'une quelconque des revendications précédentes,
**caractérisé en ce que**
la couche de vernis total (41) présente au moins une couche de décollement (43) et/ou au moins une couche de vernis de protection (44) et/ou au moins une couche d'apprêt (46) et/ou au moins une couche de colle (47) et/ou au moins une couche de couleur.

7. Film décoratif selon la revendication 6,
**caractérisé en ce que**
au moins une couche de décollement (43) de l'au moins une couche de décollement (43) comprend un matériau ou une combinaison de matériaux sélectionnée parmi : la cire, le silicone, le polyuréthane et/ou des polymères, de préférence le copolymère d'acrylate, des copolymères de polyester, des copolymères de polystyrène, des copolymères de polycarbonate ;
et/ou
**en ce qu'**au moins une couche de décollement (43) de l'au moins une couche de décollement (43) présente une épaisseur dans la plage de 0,01 µm à 0,50 pm, de préférence de 0,10 µm à 0,30 pm,
et/ou
**en ce qu'**au moins une couche de décollement (43) de l'au moins une couche de décollement (43) est réalisée de manière transparente et/ou translucide et/ou opaque et/ou colorée et/ou au moins partiellement colorée et/ou claire.

8. Film décoratif selon la revendication 6 ou 7,
**caractérisé en ce que**
au moins une couche de vernis de protection (44) de l'au moins une couche de vernis de protection (44) comprend un matériau ou une combinaison de matériaux sélectionnée parmi : des polymères, en particulier des copolymères d'acrylate, des copolymères de polyester, des copolymères de polystyrène, des copolymères de polycarbonate et/ou des copolymères de SMA.

9. Film décoratif selon la revendication 7 ou 8,
**caractérisé en ce que**
les polymères, en particulier les copolymères d'acrylate, les copolymères de polyester, les copolymères de polystyrène, les copolymères de polycarbonate et/ou les copolymères de SMA ou des combinaisons de ceux-ci, de la couche de vernis total (41) présentent une masse molaire dans la plage de 1000 g/mole à 100 000 g/mole, de préférence de 3000 g/mole à 35 000 g/mole.

10. Film décoratif selon l'une quelconque des revendications 6 à 9,
**caractérisé en ce que**
au moins une couche de vernis de protection (44) de l'au moins une couche de vernis de protection (44) présente une épaisseur dans la plage de 0,5 µm à 3 pm, en particulier de 0,8 µm à 1,3 pm,
et/ou
**en ce qu'**au moins une couche de vernis de protection (44) de l'au moins une couche de vernis de protection (44) est réalisée de manière transparente et/ou translucide et/ou opaque et/ou colorée et/ou au moins partiellement colorée et/ou claire.

11. Film décoratif selon l'une quelconque des revendications précédentes,
**caractérisé en ce que**
la force d'arrachement de la couche de vernis total (41) du film de support (42) se trouve dans une plage de 2 cN à 8 cN.

12. Film décoratif selon l'une quelconque des revendications 6 à 11,
**caractérisé en ce que**
au moins une couche décorative (45) de l'au moins une couche décorative (45) présente au moins une couche générant un effet variable optiquement
et/ou
**en ce qu'**au moins une couche décorative (45) de l'au moins une couche décorative (45) présente au moins une couche de vernis de réplique avec une structure de surface moulée dans au moins une couche de vernis de réplique de l'au moins une couche de vernis de réplique, en particulier sélectionnée parmi : la structure de surface diffractive, la structure de surface réfractive, la structure de lentille, la structure mate et/ou le réseau blaze ;
et/ou
**en ce qu'**au moins une couche décorative (45) de l'au moins une couche décorative (45) présente au moins une couche réflectrice, en particulier au moins une couche réflectrice formée avec un motif sous la forme d'une première information.

13. Film décoratif selon l'une quelconque des revendications 6 à 12,
**caractérisé en ce que**
au moins une couche décorative (45) de l'au moins une couche décorative (45) présente au moins un élément de couche de film mince pour la génération d'un effet de variation de couleur dépendant de l'angle de vue
et/ou
**en ce qu'**au moins une couche décorative (45) de l'au moins une couche décorative (45) présente au moins une couche de couleur formée avec un motif sous la forme d'une seconde information
et/ou
**en ce qu'**au moins une couche décorative (45) de l'au moins une couche décorative (45) comprend au moins une couche métallique et/ou au moins une couche diélectrique
et/ou
**en ce qu'**au moins une couche décorative (45) de l'au moins une couche décorative (45) présente une épaisseur dans la plage de 8 nm à 60 nm, en particulier de 10 nm à 30 nm.

14. Film décoratif selon la revendication 13,
**caractérisé en ce que**
au moins une couche métallique de l'au moins une couche métallique comprend un matériau ou une combinaison de matériaux sélectionnée parmi : l'aluminium, l'argent, l'or, le cuivre, le nickel, le chrome et/ou un alliage comprenant au moins deux de ces métaux ;
et/ou
**en ce qu'**au moins une couche diélectrique de l'au moins une couche diélectrique comprend un matériau ou une combinaison de matériaux sélectionnée parmi : l'oxyde métallique, le polymère, le vernis et/ou le matériau HRI, en particulier MgO, TiOₙ, Al₂O₃, ZnO, ZnS et/ou SiOₙ, dans lequel la variable n se trouve de préférence dans la plage d'une valeur supérieure ou égale à 0 à une valeur inférieure ou égale à 3.

15. Film décoratif selon l'une quelconque des revendications 6 à 14,
**caractérisé en ce que**
au moins une couche d'apprêt (46) de l'au moins une couche d'apprêt (46) présente une épaisseur dans la plage de 0,1 µm à 2 pm, en particulier de préférence de 0,2 µm à 0,8 µm
et/ou
**en ce qu'**au moins une couche d'apprêt (46) de l'au moins une couche d'apprêt (46) est réalisée de manière transparente et/ou translucide et/ou opaque et/ou colorée et/ou au moins partiellement colorée et/ou claire.

16. Procédé de fabrication d'un film décoratif, en particulier selon l'une quelconque des revendications 1 à 15, dans lequel le procédé comprend les étapes suivantes qui sont réalisées en particulier dans l'ordre suivant :
a) la fourniture d'un film de support (42), dans lequel le film de support (42) présente une épaisseur dans la plage de 3,0 µm à 10,0 pm,
b) l'application d'une couche de vernis total (41) sur au moins une zone au moins d'une surface du film de support (42), dans lequel un film décoratif (40) est réalisé,
et en ce que la couche de vernis total (41) présente dans l'étape b) une épaisseur dans la plage de 1,0 µm à 2,5 µm
et en ce que la couche de vernis total (41) présente dans l'étape b) au moins une couche décorative et en ce qu'au moins une couche décorative (45) de l'au moins une couche décorative (45) présente une épaisseur dans la plage de 8 nm à 500 nm.

17. Procédé selon la revendication 16,
**caractérisé en ce que**
la couche de vernis total (41) présente dans l'étape b) une épaisseur dans la plage de 1,0 pm à 1,7 µm
et/ou
**en ce que** le rapport entre l'épaisseur du film de support (42) et l'épaisseur de la couche de vernis total (41) se trouve dans une plage de 1,8:1 à 7,0:1, de préférence de 2,5:1 à 5,8:1, dans lequel le film de support (42) présente une épaisseur dans une plage d'une valeur supérieure ou égale à 3 µm à une valeur inférieure ou égale à 7 µm et/ou
**en ce que** le rapport entre l'épaisseur du film de support (42) et l'épaisseur du vernis total se trouve dans une plage de 4,1:1 à 10,1:1, de préférence de 4,4:1 à 8,3:1, dans lequel le film de support (42) présente une épaisseur dans une plage d'une valeur supérieure ou égale à 7 µm à une valeur inférieure ou égale à 10 pm.

18. Procédé selon la revendication 16 ou 17,
**caractérisé en ce que**
la couche de vernis total (41) présente dans l'étape b) au moins une couche de décollement (43) et/ou au moins une couche de vernis de protection (44) et/ou au moins une couche d'apprêt (46) et/ou au moins une couche de colle (47) et/ou au moins une couche de couleur.

19. Procédé de décoration d'un substrat cible, dans lequel le procédé comprend les étapes suivantes qui sont réalisées en particulier dans l'ordre suivant :
d) la fourniture d'un film décoratif (40) selon l'une quelconque des revendications 1 à 15,
e) la fourniture d'un substrat cible (10),
f) l'application du film décoratif (40) sur le substrat cible (10).

20. Procédé selon la revendication 19,
**caractérisé en ce que**
au moins une couche de couleur est appliquée sur au moins une surface de la couche de vernis total (41) après l'étape f) de sorte que la force d'adhérence entre au moins une couche de couleur de l'au moins une couche de couleur et la couche de vernis total (41) s'élève à au moins 25 cN, de préférence à au moins 30 cN.

21. Procédé selon la revendication 19 ou 20,
**caractérisé en ce que**
la couche de vernis total (41) présente après l'étape f) un pouvoir couvrant supérieur ou égal à 99,5 %, de préférence de 100 % pour une décoration d'une surface pleine continue, et une perception de décoration ou de point supérieure ou égale à 99,5 %, de préférence de 100 % pour une décoration d'une zone en demi-teinte à 10 %.
